# EUROPEAN PATENT SPECIFICATION

(11) **EP 3 444 230 B1**
(45) Date of publication and mention of the grant of the patent: **14.10.2020**
(21) Application number: 18188731.6
(22) Date of filing: 13.08.2018
(51) Int. Cl.: C03B 37/03

(54) **FLUID BEARINGS HAVING A FIBER SUPPORT CHANNEL FOR SUPPORTING AN OPTICAL FIBER DURING AN OPTICAL FIBER DRAW PROCESS**
GLEITLAGER MIT EINEM FASERSTÜTZKANAL ZUR UNTERSTÜTZUNG EINER GLASFASER WÄHREND EINES GLASFASERZIEHVERFAHRENS
PALIERS DE FLUIDE COMPORTANT UN CANAL DE SUPPORT DE FIBRES DESTINÉS À SUPPORTER UNE FIBRE OPTIQUE PENDANT UN PROCESSUS D'ÉTIRAGE DE FIBRE OPTIQUE

(30) Priority: 16.08.2017 US 201762546163 P; 06.09.2017 NL 2019489
(43) Date of publication of application: 20.02.2019
(60) Divisional application: 20192508.8
(73) Proprietor: Corning Incorporated, Corning, New York 14831 (US)
(72) Inventor: MOORE, Robert Clark, CORNING, NY 14831 (US); REDING, Bruce Warren, CORNING, NY 14831 (US)
(74) Representative: Duxbury, Stephen

(56) References cited:
- EP-A2- 0 493 679
- US-A1- 2010 281 922

## Description

The present specification generally relates to methods for drawing optical fibers using optical fiber production systems having fluid bearings.

Conventional techniques and manufacturing processes for producing optical fibers generally include drawing an optical fiber downwardly along a linear pathway through the stages of production. However, this technique provides significant impediments to improving and modifying production of the optical fiber. For example, the equipment associated with linear production of optical fibers is usually aligned in a top to bottom fashion thereby making it difficult to add or modify the process without adding height to the overall system. In some cases, addition to the linear production system requires additional construction to add height to a building housing (e.g., where the draw tower is at or near the ceiling of an existing building). Such impediments cause significant costs in order to provide modifications or updates to optical fiber production systems and facilities.

Providing systems and methods which allow a manufacturer to eliminate the need for linear only systems would significantly reduce costs of implementing modifications or updates. For example, by having a system which stretches horizontally (as opposed or in addition to vertically), it would be much easier and cost effective to provide additional components and equipment to the production system. In addition, such arrangements could provide more efficient process paths to enable the use of lower cost polymers, higher coating speeds and provide for an improved fiber cooling technologies.

A method for producing optical fibers along non-linear paths incorporating fluid bearings is disclosed in US 2010/0281922 A1, wherein an optical fiber is drawn from a preform along a first pathway, contacted with a region of fluid cushion of a fluid bearing, and redirected along a second pathway as the fiber is drawn across the region of fluid cushion.

An air bearing for guiding an optical fiber disclosed in EP 0493679 A2. The air bearing has two circular disks each with etched radial channels on one major surface, which are sandwiched to opposite sides of a separator. The assembly of disks and separator is mounted into an axial support which supplies pressurized air to a plenum between the disks . The air passes along the channels to be emitted into a groove at the peripheral edges of the disks forming a supporting air cushion for the filament.

A fluid bearing for directing optical fibers during manufacturing is presented. The fluid bearing provides a flow of fluid to levitate and direct an optical fiber along a process pathway. The fluid bearing preferably includes a fiber slot and a fluid slot. The optical fiber can be situated in the fiber slot and subjected to an upward force from fluid flowing from the fluid slot. The fluid slot can be positioned at an inner radial position of the fluid bearing and the fiber slot can be positioned at an outer radial position of the fluid bearing. The fluid slot is in fluid communication with the fiber slot. Fluid flows through the fluid slot to the fiber slot and out an opening of the fiber slot. The optical fiber enters the fiber slot through the opening and is subjected to a levitating force supplied by the fluid. The levitating force or pressure of the fluid acting on the optical fiber can be described by a convex force curve, according to which the upward (levitating) force on the optical fiber increases as the optical fiber moves deeper in the slot. Better stability in the positioning of the optical fiber in the fiber slot is achieved and contact of the optical fiber with solid surfaces of the fluid bearing is avoided. Various fluid bearing structures for achieving a convex force curve are described herein. The optical fiber is drawn through the fiber slot, along an optical fiber pathway, through the fluid bearing by draw tension. In other words, the fiber slot can form at least part of the optical fiber pathway, i.e the pathway the fiber follows in the fluid bearing when being drawn therethrough.

The present invention extends to a fluid bearing, a system comprising this fluid bearing, the use of the fluid bearing or system and a method, for producing an optical fiber according to the claims.

Additional features and advantages of the processes and systems described herein will be set forth in the detailed description which follows, and in part will be readily apparent to those skilled in the art from that description or recognized by practicing the disclosure described herein, including the detailed description which follows, the claims, as well as the appended drawings.

The disclosure also includes the following clauses;
1. A fluid bearing for use in producing an optical fiber, the bearing comprising:
   - an optical fiber pathway along which the optical fiber is drawn through the fluid bearing by way of draw tension;
   - a fluid pathway along which fluid is directed with a force or pressure against the optical fiber as it is drawn through the fluid bearing along the optical fiber pathway to thereby cushion the optical fiber in the bearing, whereby the optical fiber is stabilizable in the bearing at a position at which the fiber draw tension balances the fluid force; and
   - tension compensating means for compensating tension in the optical fiber resulting from an imbalance between the draw tension and the fluid force, so that displacement from the position at which the fiber draw tension balances the fluid force is counteracted, whereby the optical fiber is displaceable through the bearing without mechanical contact between the optical fiber and the fluid bearing.
2. The fluid bearing according to clause 1, wherein the fluid bearing comprises a fiber support channel encompassing the optical fiber pathway, which fluid support channel provides a plenum for the fluid, and which fiber support channel is configured so that the optical fiber is displaceable through the bearing without rotation of the fluid bearing.
3. The fluid bearing according to clauses 1 or 2, further comprising a first plate and a second plate, the fiber support channel disposed between the first and second plates.
4. The fluid bearing according to clause 3, further comprising an inner member (136) sandwiched between the first and second plates, which inner member has a diameter less than a diameter of the first and second plates, whereby an imaginary plane passes through a center of the inner member, and the first and second plates.
5. The fluid bearing according to any of the clauses 1 - 3, wherein the tension compensating means comprise force or pressure reducing means for reducing the force or pressure of the fluid directed against the optical fiber.
6. The fluid bearing according to clauses 2 - 5, wherein the fiber support channel comprises a fiber slot (152) and a fluid slot (154) through which the fluid is directed against the optical fiber.
7. The fluid bearing according to clause 5, wherein the fiber slot has a first end between an external bearing opening, formed by the first and second plates, and the optical fiber pathway, and a second end between the inner member and the fiber pathway, the fiber slot having a depth extending between the first and second ends.
8. The fluid bearing according to clause 7, wherein the fiber slot is tapered towards the second end.
9. The fluid bearing according to clause 7 or 8, wherein the fluid slot is associated with the second end of the fiber slot.
10. The fluid bearing according to any of the preceding clauses 3 - 9, wherein the pressure reducing means comprise one or more pressure relief vents which extend through the first and second plates, which vents preferably comprise a variable azimuthal width such that each relief vent is wider at an end facing towards the external bearing opening.
11. The fluid bearing according to any of the preceding clauses 3 - 10, wherein the pressure reducing means comprise one or more pressure relief slots which extend partially into the first and second plates, preferably wherein each slot comprises multiple slot segments each tapered at different angles with respect to the fiber slot.
12. The fluid bearing according to any of the preceding clauses 3 - 11, wherein the pressure reducing means comprise one or more porous material regions in the first and second plates, preferably wherein the porosity of the one or more porous material regions decreases with increasing depth in the fiber channel, and/or preferably wherein two or more of the porous material regions have different densities, such that a first porous material region has a lower density than a second porous material region, which first porous material region is closer to the external bearing opening than the second porous material region.
13. The fluid bearing according to any of the preceding clauses 5 - 10, configured to limit or prevent the optical fiber entering or mechanically contacting the fluid slot.
14. The fluid bearing according to any of the preceding clauses 6 - 13, wherein a position of the optical fiber in the fiber slot and the pressure of the fluid on the optical fiber at that position is functionally related, which functional relationship is graphically representable by way of plotting the position of the optical fiber at a particular depth in the fiber slot against the force of the fluid directed against the optical fiber at the position to provide a force curve.
15. The fluid bearing according to clause 14, wherein the force curve is convex in shape.
16. System for providing an optical fiber, the system comprising a plurality of fluid bearings according to any of the preceding clauses, wherein a first bearing is positioned in a different horizontal plane than a second bearing.
17. A method for producing an optical fiber, preferably using the fluid bearing or system according to any of the preceding clauses, the method comprising:
   - directing a bare optical fiber along a first pathway to a fluid bearing, the fluid bearing comprising a fiber support channel having an opening, the fiber support channel extending away from the opening in a depth direction, the bare optical fiber entering the fiber support channel through the opening; and
   - flowing a fluid through the fiber support channel toward the opening of the fiber support channel, the fluid contacting the bare optical fiber and providing an upward force on the bare optical fiber, the upward force defined by a force curve describing a dependence of the upward force on a depth of the bare optical fiber in the fiber support channel, the force curve having a convex shape.
18. The method of clause 17, wherein the directing includes one or more of the following:
   - drawing the bare optical fiber from an optical fiber preform;
   - conveying the bare optical fiber at a speed greater than 50 m/s along the first pathway; and includes
   - applying tension to the bare optical fiber.
19. The method of clause 17 or 18, wherein the fluid bearing redirects the bare optical fiber from the first pathway to a second pathway.
20. The method of any of the clauses 17 - 19, wherein the fluid bearing comprises a first plate and a second plate, the fiber support channel being disposed between the first plate and the second plate, the opening being defined by an outer surface of the first plate and an outer surface of the second plate.
21. The method of clause 20, wherein the first plate includes a first inner face and a first outer face and the second plate includes a second inner face and a second outer face, the first inner face and second inner face facing the fiber support channel.
22. The method of clause 21, wherein the first inner face includes a first plurality of openings and the second inner face includes a second plurality of openings, each of the first plurality of openings extending from the first inner face toward the first outer face and each of the second plurality of openings extending from the second inner face toward the second outer face.
23. The method of clause 22, wherein each of the first plurality of openings extends from the first inner face through the first plate to the first outer face and each of the second plurality of openings extends from the second inner face through the second plate to the second outer face.
24. The method of clause 22, wherein each of the first plurality of openings has a first non-constant width in the first inner face and each of the second plurality of openings has a second non-constant width in the second inner face, the first non-constant width and the second non- constant width decreasing in the depth direction.
25. The method of any of the clauses 22-24, wherein each of the first plurality of openings has a first direction of extension from the first inner face toward the first outer face and each of the second plurality of openings has a second direction of extension from the second inner face toward the second outer face, the first direction of extension being perpendicular to the depth direction and the second direction of extension being perpendicular to the depth direction.
26. The method of clause 25, wherein each of the first plurality of openings has a first non-constant length in the first direction of extension and each of the second plurality of openings has a second non-constant length in the second direction of extension, the first non-constant length and the second non-constant length decreasing in the depth direction, preferably wherein the first non-constant length and the second non-constant length vary non-linearly in the depth direction.
27. The method of any of the preceding clauses 20 - 26, wherein the first plate further includes a third inner face adjacent the first inner face and the second plate further includes a fourth inner face adjacent the second inner face, the first inner face and the second inner face having a first slope magnitude relative to an axis extending in the depth direction and the third inner face and fourth inner face having a second slope magnitude relative to the axis extending in the depth direction, the first slope magnitude differing from the second slope magnitude.
28. The method of clause 27, wherein the first inner face, the second inner face, the third inner face, and the fourth inner face are linear segments.
29. The method of clause 27 or 28, wherein the first inner face is adjacent to the first outer face and the second inner face is adjacent to the second outer face, and wherein the first slope magnitude is less than the second slope magnitude.
30. The method of any of the clauses 27 - 29, wherein the first slope magnitude is defined by a first angle with respect to the axis extending in the depth direction,
   the first angle being greater than one of the following:
   0°,
   0.1°,
   0.2°,
   0.3°, or
   wherein the first angle is in the range from 0.1° - 9°, preferably wherein the first angle is in the range from 0.3° - 7°.
31. The method of any of the clauses 27 - 30, wherein the second slope magnitude is defined by a second angle with respect to the axis extending in the depth direction, the second angle being greater than one of the following:
   0°,
   0.1°,
   0.2°,
   0.3°, or
   wherein the second angle is in the range from 0.1° - 9°, preferably wherein the first angle is in the range from 0.3° - 7°.
32. The method of clause 30 or 31, wherein the first angle is greater than 0.1° and the second angle is greater than 0.1°, preferably wherein the first angle is greater than 0.2° and the second angle is greater than 0.1°, more preferably wherein the first angle is greater than 0.3° and the second angle is greater than 0.1°.
33. The method of any of the preceding clauses 30 - 32, wherein the first angle is in the range from 0.1° - 9° and the second angle is in the range from 0.3° - 7°.
34. The method of any of the clauses 30 - 33, wherein the first angle is greater than the second angle by at least 0.1°, preferably wherein the first angle is greater than the second angle by at least 0.3°.
35. The method of any of the clauses 21 - 34, wherein the first inner face includes a curved segment and said second inner face includes a curved segment.
36. The method of any of the clauses 21 - 35, wherein the first inner face comprises a first porous material and the second inner face comprises a second porous material, the first porous material extending from the first inner face toward the first outer face and the second porous material extending from the second inner face toward the second outer face.
37. The method of clause 36, wherein the first porous material extends from the first inner face through the first plate to the first outer face and the second porous material extends from the second inner face through the second plate to the second outer face.
38. The method of clause 36 or 37, wherein the first porous material has a first non- constant width in the first inner face and the second porous material has a second non-constant width in the second inner face, the first non-constant width and the second non-constant width increasing in the depth direction.
39. The method of any of the clauses 36 - 38, wherein the first porous material has a first direction of extension from the first inner face toward the first outer face and the second porous material has a second direction of extension from the second inner face toward the second outer face, the first direction of extension being perpendicular to the depth direction and the second direction of extension being perpendicular to the depth direction.
40. The method of any of the clauses 36 - 39, wherein the first porous material has a first non-constant length in the first direction of extension and the second porous material has a second non-constant length in the second direction of extension, the first non-constant length and the second non-constant length increasing in the depth direction.
41. The method of any of the preceding clauses 17 - 40, wherein the force curve includes a first linear segment having a first slope and a second linear segment having a second slope, the second slope differing from the first slope.
42. The method of any of the preceding clauses 17 - 41, wherein the force curve includes a curved segment.
43. The method of any of the preceding clauses 17 - 42, wherein the fiber support channel is symmetrically disposed about an axis extending in the depth direction.

The disclosure set forth in the drawings are illustrative and exemplary in nature and not intended to limit the subject matter defined by the claims. The following detailed description of the present invention can be understood when read in conjunction with the following drawings, where like structure is indicated with like reference numerals and in which:
FIG. 1 is a schematic illustration of an optical fiber production system, according to the present invention;
FIG. 2 is an exploded view of a fluid bearing for use in an optical fiber production system, according the present invention;
FIG. 3A is a partial side plan view of the fluid bearing of FIG. 2, according to the present invention;
FIG. 3B is a partial front plan view of the fluid bearing of FIG. 2, according to the present invention;
FIG. 4A is a partial side plan view of another embodiment of a fluid bearing for use in an optical fiber production system, according to the present invention;
FIG. 4B is a partial front plan view of the fluid bearing of FIG. 4A, according to the present invention;
FIG. 5A is a partial side plan view of another embodiment of a fluid bearing for use in an optical fiber production system, according to the present invention;
FIG. 5B is a partial front plan view of the fluid bearing of FIG. 5A, according to the present invention;
FIG. 5C is a partial top plan view of the fluid bearing of FIG. 5A, according to the present invention;
FIG. 6A is a partial side plan view of another embodiment of a fluid bearing for use in an optical fiber production system, according to the present invention;
FIG. 6B is a partial front plan view of the fluid bearing of FIG. 6A, according to the present invention;
FIG. 7A is a partial side plan view of another embodiment of a fluid bearing for use in an optical fiber production system, according to the present invention;
FIG. 7B is a partial front plan view of the fluid bearing of FIG. 7A, according to the present invention;
FIG. 8A is a partial side plan view of another embodiment of a fluid bearing for use in an optical fiber production system, according to the present invention;
FIG. 8B is a partial front plan view of the fluid bearing of FIG. 8A, according to the present invention;
FIG. 9A is a partial side plan view of another embodiment of a fluid bearing for use in an optical fiber production system, according to the present invention;
FIG. 9B is a partial front plan view of the fluid bearing of FIG. 9A, according to the present invention;
FIG. 9C is a partial top plan view of the fluid bearing of FIG. 9A, according to the present invention;
FIG. 10A is a partial side plan view of another embodiment of a fluid bearing for use in an optical fiber production system, according to the present invention;
FIG. 10B is a partial front plan view of the fluid bearing of FIG. 10A, according to the present invention;
FIG. 11A is a partial side plan view of another embodiment of a fluid bearing for use in an optical fiber production system, according to the present invention;
FIG. 11B is a partial side plan view of another embodiment of a fluid bearing for use in an optical fiber production system, according to the present invention;
FIG. 12A depicts a force curve for fiber slots of two designs; FIG. 12B depicts two designs of a fiber slot;
FIG. 12C depicts convex force curves having linear segments; FIG. 12D depicts convex force curves having curved segments; FIG. 12E depicts a non-convex force curve having linear segments;
FIG. 12F depicts a non-convex force curve having curved segments;
FIG. 13A is a partial side plan view of another embodiment of a fluid bearing for use in an optical fiber production system, according to the present invention;
FIG. 13B is a partial front plan view of the fluid bearing of FIG. 13A, according to the present invention; and
FIG. 14 is a partial side plan view of another embodiment of a fluid bearing for use in an optical fiber production system, according to the present invention shown and described herein.

Reference will now be made in detail the methods and systems for producing optical fibers according to the present invention, examples of which are illustrated in the accompanying drawings. Whenever possible, the same reference numerals will be used throughout the drawings to refer to the same or like parts. More specifically, the methods and systems described herein relate to production of optical fibers along a draw pathway that comprise one or more non-vertical pathway portions facilitated by one or more fluid bearings. Further, the one or more fluid bearings each comprise a fiber support channel to provide a fluid cushion for an optical fiber disposed in the fiber support channel. The disclosure described herein provides optical fiber production flexibility by allowing the optical fiber to be transported along non-vertical pathways through all stages of production, including prior to a protective coating being applied thereto.

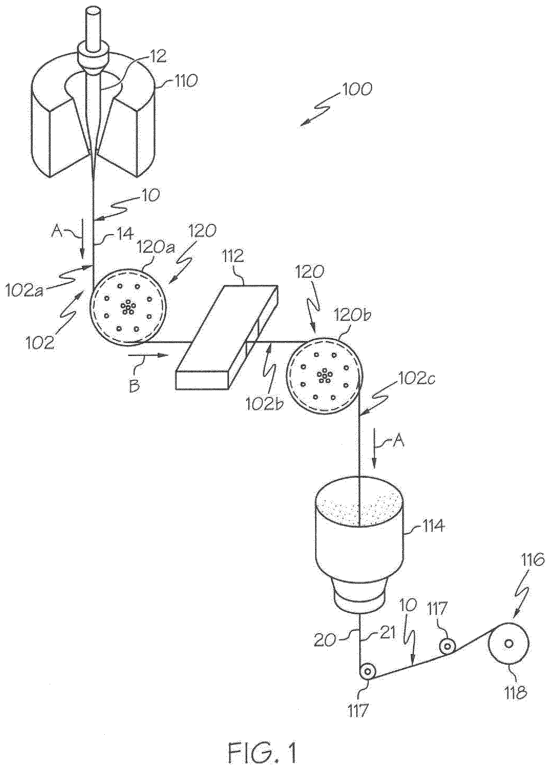

Referring now to FIG. 1, an optical fiber production system 100 configured to produce an optical fiber is schematically depicted. The optical fiber production system 100 comprises a draw furnace 110, a fiber cooling mechanism 112, one or more fluid bearings 120, a fiber coating unit 114, and a fiber collection unit 116. As depicted in FIG. 1, a draw pathway 102 extends from the draw furnace 110 to the fiber collection unit 116 and is the pathway along which an optical fiber 10 travels during production. The draw pathway 102 comprises one or more draw pathway portions, for example, a first draw pathway portion 102a, a second draw pathway portion 102b, and a third draw pathway portion 102c. Further, these draw pathway portions may be vertical (denoted by the "A" direction) or non-vertical (denoted by the "B" direction). In operation, the optical fiber 10 may be directed through the one or more non-vertical draw pathway portions (e.g., the second draw pathway portion 102b) using the one or more fluid bearings 120, as described in more detail herein.

As depicted in FIG. 1, an optical fiber preform 12 is placed in the draw furnace 110 and fiber is drawn therefrom to create a bare optical fiber 14. The optical fiber preform 12 may be constructed of any glass or material suitable for the manufacture of optical fibers. Further, as used herein, "bare optical fiber" refers to an optical fiber directly drawn from a preform and prior to applying a one or more coating layers to its outer surface (e.g., prior to the bare optical fiber being coated with one or more coating layers, such as protective polymeric-based coating layers). Reference to the "optical fiber 10" herein may refer to the bare optical fiber 14 or a coated optical fiber 20 (e.g., the bare optical fiber with one or more coating layers applied thereto).

In operation, the bare optical fiber 14 is drawn from the optical fiber preform 12, leaves the draw furnace 110, travels along the first draw pathway portion 102a in the A direction, then reaches a first fluid bearing 120a of the one or more fluid bearings 120 and shifts from the first draw pathway portion 102a, traveling in the A direction (which is substantially vertical), to the second draw pathway portion 102b, traveling in the B direction. Along the second draw pathway portion 102b, the bare optical fiber 14 may traverse the fiber cooling mechanism 112. As illustrated, the second draw pathway portion 102b is oriented orthogonal (e.g., horizontally) with respect to the first draw pathway portion 102a, but it should be understood that systems and methods described herein can redirect the optical fiber 10 (e.g., the bare optical fiber 14) along any non-vertical pathway prior to (or after) a coating layer 21 being applied thereto.

Providing an optical fiber production system having one or more non-vertical pathway portions, for example, prior to coating the bare optical fiber 14, has many advantages. For example, in conventional linear fiber production systems, adding new or additional components prior to the fiber coating unit 114, such as extra coating units and extra cooling mechanisms, requires that all such components be arranged vertically, often requiring an increase in height of the overall system. With the optical fiber production system 100 described herein, the optical fiber 10 can be routed horizontally or diagonally (e.g. off vertical) prior to the coating layer 21 being applied to allow more flexibility not only in set up of the equipment, but for later modifications, additions and updates within an existing production facility without a need to increase overall system height.

Referring again to FIG. 1, the bare optical fiber 14 is cooled as it passes through the fiber cooling mechanism 112 and prior to being subjected to the fiber coating unit 114 where the coating layer 21 (e.g., a primary protective coating layer) is applied to the outer surface of the bare optical fiber 14, thereby forming the coated optical fiber 20. The fiber cooling mechanism 112 can be any mechanism known in the art for cooling optical fiber. For example, the fiber cooling mechanism 112 may be filled with a gas that can facilitate cooling of the bare optical fiber 14 at a rate faster or slower than cooling the bare optical fiber 14 in air. It should be understood that the fiber cooling mechanism 112 is an optional component and other embodiments of the optical fiber production system 100 may not comprise the fiber cooling mechanism 112.

As depicted in FIG. 1, the one or more fluid bearings 120 may comprise a second fluid bearing 120b, which can be used to transport the bare optical fiber 14 from the second draw pathway portion 102b, generated by the alignment of first and second fluid bearings 120a, 120b, to the third draw pathway portion 102c, which may be substantially vertical and may be parallel to the first draw pathway portion 102a. As depicted in FIG. 1, the third draw pathway portion 102c extends from the second fluid bearing 120b to the fiber coating unit 114. After leaving fiber coating unit 114, the coated optical fiber 20 with the coating layer 21 (no longer being bare) can go through a variety of other processing stages (not shown) within the optical fiber production system 100 before reaching the fiber collection unit 116. The fiber collection unit 116 includes one or more drawing mechanisms 117 used to apply tension to the coated optical fiber 20, thereby providing the necessary tension on the optical fiber 10 as it is drawn throughout the optical fiber production system 100 as shown in FIG. 1. The fiber collection unit 116 also includes a fiber storage spool 118 and the coated optical fiber 20 may be wound onto the fiber storage spool 118. Moreover, while three draw pathway portions (102a, 102b, 102c) are depicted in FIG. 1, it should be understood that any number of pathway portions each comprising a vertical or non-vertical orientation are contemplated.

As described in more detail herein, the one or more fluid bearings 120 (e.g., the first and second fluid bearings 120a and 120b) transport the bare optical fiber 14 through the optical fiber production system 100 such that the bare optical fiber 14 does not make mechanical contact with any surface until after the coating layer 21 is applied to the bare optical fiber 14 (thereby forming the coated optical fiber 20). In operation, the one or more fluid bearings 120 may provide a region of fluid over which the bare optical fiber 14 can travel without making mechanical contact with the fluid bearings 120, for example, with a fluid that is nonreactive relative to the bare optical fiber 14 (e.g., air, helium). As used herein, mechanical contact refers to contact with a solid component in the draw process. This lack of mechanical contact can be important to maintain the quality and integrity of the fragile bare optical fiber, especially one which travels through a non-vertical path prior to being coated by fiber coating unit 114. The mechanical contact provided by the fiber collection unit 116 is acceptable because when the optical fiber reaches the fiber collection unit 116, the optical fiber 10 has been coated with a coating layer 21 that protects the fiber, and as such, mechanical contact with a solid surface does not substantially affect the quality or integrity of the fiber in the same way as if the fiber was uncoated. However, it should be understood that while the fluid bearings 120 are primarily described herein as facilitating travel of the bare optical fiber 14 along the draw pathway 102, fluid bearings 120 may be used with any optical fiber 10, such as, the coated optical fiber 20.

While providing a region of fluid cushion over which the bare optical fiber 14 can travel, the one or more fluid bearings 120 may also cool the bare optical fiber 14. For example, in embodiments without the fiber cooling mechanism 112, the one or more fluid bearings 120 may perform the cooling functionality of the fiber cooling mechanism 112. In particular, because the one or more fluid bearings 120 employ a moving fluid stream which supports the bare optical fiber 14, the bare optical fiber 14 is cooled at a rate which is faster than the bare optical fiber 14 would cool in ambient non-moving air, such as may be present immediately outside the draw furnace 110. Further, the greater the temperature differential between the bare optical fiber 14 and the fluid in the fluid bearing 120 (which is preferably ambient or room temperature air), the greater the ability of the fluid bearing 120 to cool the bare optical fiber 14.

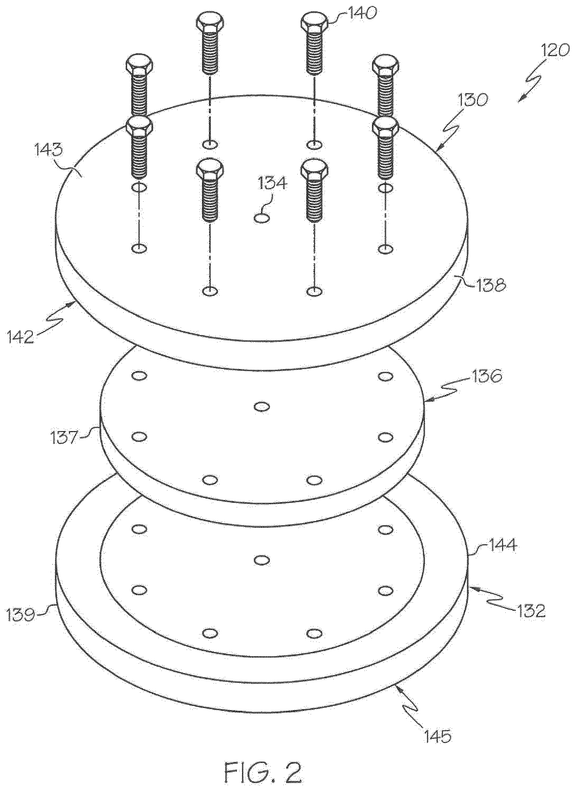

Referring now to FIG. 2, the fluid bearing 120 is depicted in more detail. The fluid bearing 120 includes a first plate 130, a second plate 132, an inner member 136, and at least one opening 134 in at least one of the first and second plates 130, 132. The first plate 130 and the second plate 132, each include an arcuate outer surface 138, 139 and are positioned on opposite sides of each other. The arcuate outer surfaces 138, 139 lie along the circumference of each of the respective plates 130, 132 and are substantially aligned with one another. Further, the first plate 130 and the second plate 132 are connected by fasteners (e.g., bolts 140) to link the first and second plates 130, 132 together so that fluid may be passed through the fluid bearing 120.

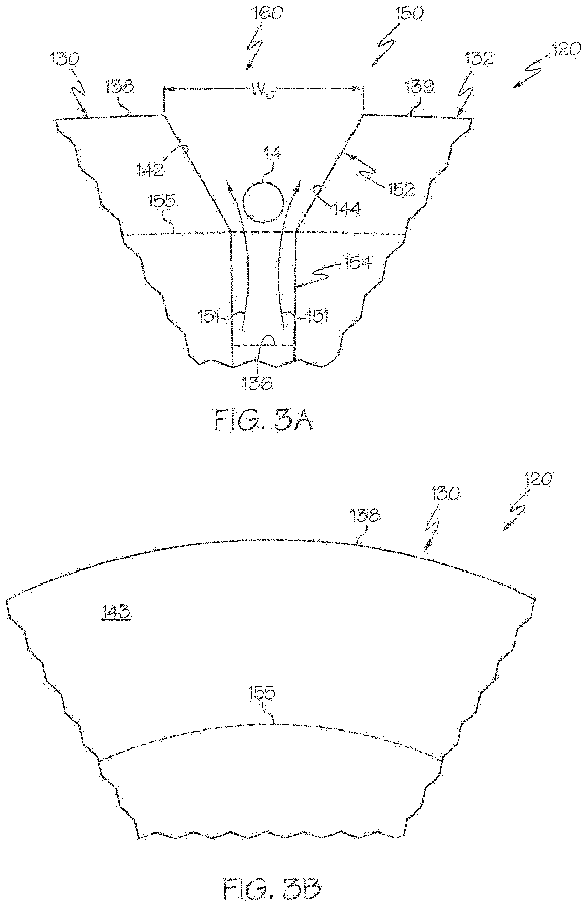

The first plate 130 and the second plate 132 each have respective inner faces 142, 144 and outer faces 143, 145. The inner face 142 of the first plate 130 faces the inner face 144 of the second plate 132 to form a fiber support channel 150 (as depicted in FIGS. 3A and 3B) between the inner faces 142, 144 and extending radially inward from the arcuate outer surfaces 138, 139 of each plate 130, 132. The fiber support channel 150 provides a plenum for fluid flow and is configured to receive the bare optical fiber 14 (or any other optical fiber 10) so that the bare optical fiber 14 can travel along the fiber support channel 150 without rotation of the fluid bearing 120 and without mechanical contact between the bare optical fiber 14 and the fluid bearing 120. Various configurations of the fiber support channel 150 are described in more detail herein. Further, the at least one opening 134 passes through at least one of the first plate 130 and the second plate 132 and allows for fluid (e.g., air, helium or other desired gas or liquid) to be fed into the fluid bearing 120 so that the fluid can exit the fluid bearing 120 thorough the fiber support channel 150, thereby providing a fluid cushion for a bare optical fiber 14 disposed in the fiber support channel 150 (FIG. 3A).

Referring still to FIG. 2, the fluid bearing 120 can also include an inner member 136 positioned between the first plate 130 and the second plate 132. The inner member 136 (e.g., a shim 137) is configured to aid in directing fluid from the at least one opening 134 into the fiber support channel 150 such that the fluid exits the fiber support channel 150 having a predetermined flow direction. The inner member 136 is disposed between the first plate 130 and second plate 132 to provide a gap there between. The inner member 136 may comprise a plurality of fingers (not shown) to further control fluid flow by suppressing non-radial flow. In addition, the inner member 136 serves as a sealing portion to provide substantial contact between the first plate 130 and the second plate 132.

Referring now to FIG. 3A, the fiber support channel 150 is depicted in more detail. As shown in FIGS. 3A and 3B, the fiber support channel 150 comprises a fiber slot 152 and a fluid slot 154. The fiber slot 152 extends radially inward from the arcuate outer surfaces 138, 139 of the plates 130, 132 (e.g., from an opening 160 between the arcuate outer surfaces 138, 139 of the first plate 130 and the second plate 132) and terminates at a fiber support channel boundary 155. The radial inward direction is also referred to herein as the depth direction, where depth refers to the position of a bare optical fiber in the fiber support channel. Depth in the fiber support channel is measured relative to the opening to the fiber support channel and the depth direction is the direction from the opening through the fiber slot to the fluid slot. An axis corresponding to the depth direction is an axis centered in the fluid support channel or an axis parallel to an axis centered in the fluid support channel. The fiber support channel is preferably symmetric about an axis centered in the fiber support channel. The fluid slot 154 extends radially inward from the fiber support channel boundary 155 and terminates at the inner member 136. In operation, fluid may flow from radially outward from the inner member 136 through the fluid slot 154 and the fiber slot 152 to provide a fluid cushion for a bare optical fiber 14 disposed within the fiber slot 152 such that the bare optical fiber 14 may be directed along the draw pathway 102 (FIG. 1) without making mechanical contact with the fluid bearing 120.

The fiber support channel 150 extends between the inner face 142 of the first plate 130 and the inner face 144 of the second plate 132, which are spaced apart by a channel width WC. As depicted in FIG 3A, the fiber support channel 150 can be tapered, such that the channel width WC at the opening 160 is greater than the channel width WC at the fiber support channel boundary 155 and the channel width WC of the fiber support channel 150 is radially variable (e.g., variable depending on where the optical fiber 10 is vertically positioned within the fiber support channel 150).

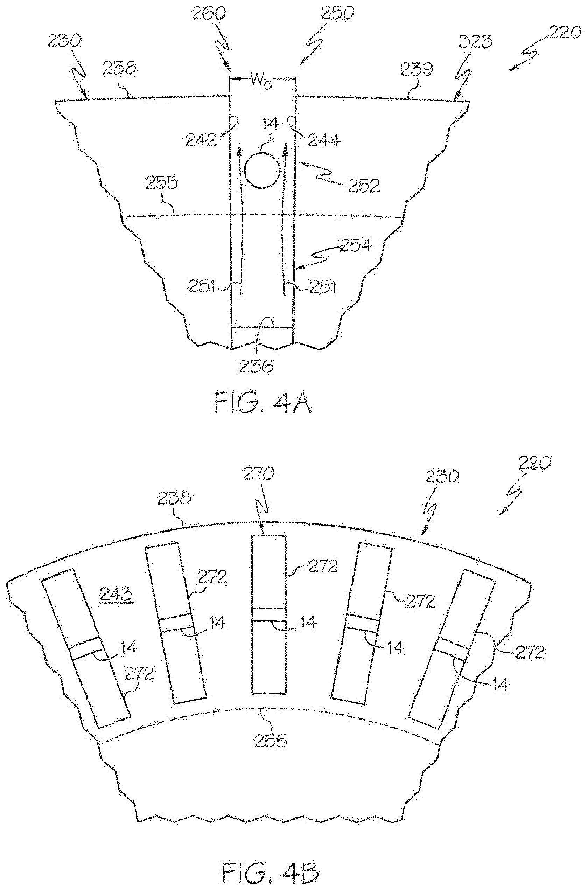

Further, FIG. 3A depicts the bare optical fiber 14 disposed within the fiber slot 152 of the fiber support channel 150 and depicts a fluid 151 (e.g., air) that flows from the fluid slot 154 (e.g., fluid flow originating from the at least one opening 134 in the first and/or second plates 130, 132) through the fiber slot 152, that contacts the bare optical fiber 14 as it is transported across the fluid bearing 120. This fluid flow results in a positive pressure below the bare optical fiber 14 that acts on and supports the bottom of the bare optical fiber 14 by providing an upward (radially outward) force, thereby levitating the bare optical fiber 14 to prevent substantial mechanical contact between the bare optical fiber 14 and the fluid bearing 120. While not intending to be limited by theory, pressure can be optimized so that the bare optical fiber 14 is positioned and vertically maintained within the fiber slot 152 of the fiber support channel 150 such that the bare optical fiber 14 is maintained between the fiber support channel boundary 155 and the opening 160 of the fiber support channel 150. For example, the fluid 151 traversing the fiber support channel 150 can have a constant fluid flow rate which can maintain or support the optical fiber 10 within the fiber slot 152 as the bare optical fiber 14 moves through the fluid bearing 120 and the design of the fiber slot 152 and/or the addition of one or more pressure release regions, described below (e.g., pressure release regions 270 of FIG. 4B) may facilitate self-location of the bare optical fiber 14 within the fiber slot 152.

Referring still to FIG. 3A, in some embodiments, the portions of the inner faces 142, 144 within the fiber slot 152 of the fiber support channel 150 may be tapered or inclined such that the fiber slot 152 comprises a narrower channel width WC at the fiber support channel boundary 155 (i.e., inside the arcuate path formed by the bare optical fiber 14 as it passes through the fluid bearing 120) than at the opening 160 of the fiber support channel 150. Inner faces 142 and 144 can each be inclined, for example, at an angle greater than 0° and less than 10°, such as from about 0.3° to about 7°, from about 0.4° to about 3°, or the like. Further, the fiber support channel 150 may comprise any depth and any channel width WC. By utilizing a fiber support channel 150 that is tapered (as shown, for example, in FIG. 3A) and injecting the fluid 151 into the fiber support channel 150 so that the fluid enters the narrower inner portion of fiber support channel 150 and exits the wider outer region of the fiber support channel 150, the cushion of fluid 151 emitted through the fiber support channel 150 will cause the bare optical fiber 14 to be self-locating within the depth of the fiber support channel 150.

While not intending to be limited by theory, for a given flow rate of fluid 151, the fiber draw tension provides a downward (radially inward) force that counteracts the upward (radially outward) force provided by the flow of fluid 151. The location of bare optical fiber 14 in fluid support channel 150 is stabilized at the position at which the downward force provided by the fiber draw tension balances the upward force provided by the flow of fluid 151. Fluctuations in draw tension that may occur during fiber draw alter the balance of forces acting on the bare optical fiber 14 and lead to displacement of bare optical fiber 14 from its stable equilibrium position. If the draw tension increases, the downward force on bare optical fiber 14 increases and bare optical fiber 14 is displaced downward from its stable equilibrium position to a position deeper in fiber support channel 150 (i.e. to a position within fiber support channel 150 further removed from opening 160). If the draw tension decreases, the downward force on bare optical fiber 14 decreases and bare optical fiber 14 is displaced upward from its stable equilibrium position to a shallower position in fiber support channel 150 (i.e. to a position within fiber support channel closer to opening 160). Downward displacement of the position of bare optical fiber 14 from its stable equilibrium position may cause bare optical fiber 14 to make mechanical contact with fiber support channel 150 and/or may cause bare optical fiber 14 to enter fluid slot 154. Upward displacement of the position of bare optical fiber 14 from its stable equilibrium position may cause bare optical fiber 14 to make mechanical contact with fiber support channel 150 and/or may cause bare optical fiber 14 to exit fiber support channel 150 and escape from fluid bearing 120.

Fiber slot 152 and/or fluid slot 154 may be designed to counteract upward and downward displacements of the stable equilibrium position of bare optical fiber 14 caused by fluctuations or other variations in draw tension. In FIG. 3A, for example, fiber slot 152 is defined by tapered inner faces 142 and 144 of first and second plates 130 and 132, respectively. If the fiber draw tension increases, the downward force on bare optical fiber 14 increases and the bare optical fiber 14 will move downward (e.g., radially inward) in the fiber slot 152. The tension-induced downward displacement of bare optical fiber 14 is compensated by an increase in the upward force provided by the fluid 151 as bare optical fiber 14 moves deeper (downward) into fiber slot 152. The flow pattern of fluid 151 in fiber slot 152 includes a portion that supports (levitates) bare optical fiber 14 and a portion that flows around bare optical fiber 14. For a given flow rate (or pressure) of fluid 151 supplied to fiber slot 152 from fluid slot 154, the portion of the flow pattern of fluid 151 that flows around bare optical fiber 14 depends on the gaps between bare optical fiber 14 and inner faces 142 and 144. Because of the taper of inner faces 142 and 144, the gaps between bare optical fiber 14 and inner faces 142 and 144 vary with the position of bare optical fiber 14 in fiber slot 152. As bare optical fiber 14 moves deeper into fiber slot 152, the gaps between bare optical fiber 14 and inner faces 142 and 144 narrow. This leads to a reduction in the portion of the flow pattern of fluid 151 that flows around bare optical fiber 14 and an increase in the portion of the flow pattern of fluid 151 that supports bare optical fiber 14. As a result, as bare optical fiber 14 moves deeper into fiber slot 152, the upward force (or pressure) of fluid 151 acting on bare optical fiber 14 increases to counteract the downward displacement of bare optical fiber 14 caused by an increase in draw tension. Similarly, if the draw tension decreases, the tension-induced downward force on bare optical fiber 14 decreases and bare optical fiber 14 moves upward (radially outward to a shallower depth) in fiber slot 152. As bare optical fiber 14 moves upward in fiber slot 152, the gaps between bare optical fiber 14 and inner faces 142 and 144 increase and a greater portion of the flow pattern of fluid 151 flows around bare optical fiber 14. The upward force (or pressure) of fluid 151 acting to levitate bare optical fiber 14 correspondingly decreases to compensate for the tension-induced upward displacement of bare optical fiber 14. Tension-induced displacements of bare optical fiber 14 are thus compensated by adjustments in the upward force provided by fluid 151 as the position of bare optical fiber 14 varies in fiber slot 152. A new stabilized equilibrium position is achieved when a balance between the tension-induced downward force and the upward force provided by fluid 151 is reestablished. As draw tension varies with time over the course of a fiber draw process, the upward and downward forces continually rebalance in a self compensating fashion to maintain a stable position of bare optical fiber 14 in fiber slot 152. Tension compensation through variation and rebalancing of the downward (radially inward) and upward (radially outward) forces is a feature of the embodiments of fluid bearing 120 disclosed herein. Various designs of fluid bearing 120 that achieve tension compensation are described herein below.

The bare optical fiber 14 may be located at a vertical position within the fiber slot 152 having a width that is from about 1 to 2 times the diameter of the bare optical fiber 14, for example, about 1 to 1.75 times the diameter of the bare optical fiber 14, about 1 to 1.5 times the diameter of the bare optical fiber 14, or the like. While not intending to be limited by theory, by locating the bare optical fiber 14 in such a relatively narrow region in the fiber slot 152, the bare optical fiber 14 will center itself between inner faces 142 and 144 during operation due to the Bernoulli effect. For example as the bare optical fiber 14 gets closer to the inner face 144 and further away from the inner face 142, the velocity of the fluid 151 will increase nearest the inner face 142 and decrease nearest the inner face 144. According to the Bernoulli effect, an increase in fluid velocity occurs simultaneously with a decrease in pressure. As a result, the greater pressure caused by the decreased fluid flow near the inner face 144 will force the bare optical fiber 14 back into the center of the fiber slot 152. Thus, the bare optical fiber 14 may be centered within fiber support channel 150 at least substantially via the Bernoulli effect due to a fluid stream which is passing around the fiber and out of the fiber support channel 150 while the fiber is being drawn (i.e. while the bare optical fiber 14 is traversing the fiber support channel 150 while traveling along the draw pathway 102 (FIG. 1).

While still not intending to be limited by theory, such centering occurs without having to utilize any flow of fluid which would impinge upon the fiber from the side thereof, e.g., there are no jets of fluid flow employed which emanate from the inner faces 142 or 144. The velocity of the fluid stream traveling through the fiber support channel 150 (e.g., through the fiber slot 152, where the bare optical fiber 14 is disposed) is preferably adjusted to maintain the bare optical fiber 14 so that the fiber is located entirely within the fiber slot 152 (e.g., the tapered portion of the fiber support channel 150 shown in FIG. 3A). Further, because the bare optical fiber 14 is located in an area of the fiber support channel 150 having a width that is between about 1 and 2 times the diameter of the bare optical fiber 14, the bare optical fiber 14 is supported by a pressure difference that exists below the bare optical fiber 14 (rather and as opposed to aerodynamic drag which might also be used to support a fiber, if one so chose). By supporting or levitating the bare optical fiber 14 within the fiber support channel 150 via a fluid pressure differential, much lower fluid flows can be employed than if aerodynamic drag were used to levitate the fiber.

Further, while the fiber support channel 150 comprises a tapered fiber slot 152 to provide tension compensation such that the bare optical fiber 14 self-locates within the fiber slot 152, other embodiments of the fluid bearing 120 are contemplated to provide tension compensation through alternative fiber slot designs and configurations as described in more detail below. For example, some of these embodiments may comprise one or more pressure release regions disposed in the first and/or second plates 130, 132 to provide tension compensation (e.g., pressure release regions 270 depicted in the embodiment of a fluid bearing 220 of FIG. 4B). However, when the fluid bearing 120 comprises the tapered fiber slot 152, pressure release regions are optional and not required to provide tension compensation, as depicted in the partial side plan view of the fluid bearing 120 of FIG. 3B.

Referring now to FIGS. 4A and 4B, a fluid bearing 220 is depicted. FIG. 4A depicts a partial side plan view of the fluid bearing 220 and FIG. 4B depicts a partial front plan view of the fluid bearing 220. The fluid bearing 220 comprises a fiber support channel 250 comprising a fiber slot 252 extending radially inward from arcuate outer surfaces 238, 239 of first and second plates 230, 232 to a fiber channel boundary 255 and a fluid slot 254 positioned radially inward from the fiber slot 252. First plate 230 includes inner face 242 and outer face 243. Second plate 232 includes inner face 244 and outer face 245. The fluid bearing 220 also includes an inner member 236 disposed between the first plate 230 and second plate 232 to provide a gap there between. As depicted in FIG. 4A, the channel width WC of the fiber slot 252 is constant through the depth of the fiber slot 252, where depth refers to position in the radial inward direction from the opening 260 defined by the space between arcuate surfaces 238, 239. For example, the channel width WC of the fiber slot 252 is the same at the opening 260 and the fiber channel boundary 255. Thus, the pressure differential caused by fluid flow through the fiber support channel 250 is not altered by the change in channel width WC as the vertical position of the bare optical fiber 14 within the fiber slot 252 changes.

Instead, referring now to FIG. 4B, the fluid bearing 220 comprises pressure release regions 270 that comprise a plurality of relief vents 272 extending through first plate 230 from inner face 242 to outer face 243 and/or through second plate 232 from inner face 244 to outer face 245. FIG. 4B depicts outer face 243 of first plate 230 in an embodiment in which first plate 230 includes pressure release regions 270 with relief vents 272. As depicted in FIG. 4B, the plurality of relief vents 272 are azimuthally spaced in first plate 230. FIG. 4B also depicts an illustrative position of bare optical fiber 14 with respect to relief vents 272. Some portions of the bare optical fiber 14 are disposed in fiber slot 252 adjacent the relief vents 272 and other portions of the bare optical fiber 14 are disposed in fiber slot 252 adjacent the inner face 242. In one embodiment, second plate 232 is similarly configured to include azimuthally spaced pressure release regions 270 with relief vents 272. In operation, some of the fluid 251 flowing through the fiber slot 252 may exit the fluid bearing 220 through the relief vents 272. In this embodiment, gap flow within the fiber slot 252 still occurs (e.g., flow between the bare optical fiber 14 and the inner faces 242, 244 that define the fiber slot 252) to create the upward and centration forces needed to maintain the position of bare optical fiber 14 within the fiber slot 252, as described above in more detail with respect to FIG. 3A.

In the embodiment of FIGS. 4A and 4B, tension compensation (e.g., self-location of the bare optical fiber 14 in the depth (radial inward) direction within the fiber slot 252 in response to variations in draw tension applied to the bare optical fiber 14) is accomplished by variations in the portion of the flow pattern of fluid 251 that flows through the pressure relief vents 272. In particular, as the bare optical fiber 14 moves upward within the fiber slot 252 (e.g., due to decreased draw tension), the area of relief vents 272 below the bare optical fiber 14 increases. For a constant flow rate (or pressure) of fluid 251, as the area of relief vents 272 below the bare optical fiber 14 increases, a larger portion of the flow pattern of fluid 251 passes through relief vents 272 and a smaller portion of the flow pattern of fluid 251 supports (levitates) the bare optical fiber 14 in fiber slot 252. As a result, the upward force of fluid 251 that acts on the bare optical fiber 14 decreases to counteract the tension-induced upward displacement of the bare optical fiber 14. As the bare optical fiber 14 moves upward in fiber slot 252, the pressure of fluid 251 acting on the bare optical fiber 14 decreases to counteract the tension-induced upward displacement. Conversely, as the bare optical fiber 14 moves downward within the fiber slot 252 (e.g., due to increased draw tension), the area of relief vents 272 below the bare optical fiber 14 decreases. As a result, a smaller portion of the flow pattern of fluid 251 passes through relief vents 272, a larger portion of the flow pattern of fluid 251 supports (levitates) the bare optical fiber 14, and the upward force of fluid 251 acting on the bare optical fiber 14 increases to counteract the tension-induced downward displacement of the bare optical fiber 14. As the bare optical fiber 14 moves downward in fiber slot 252, the force (pressure) of fluid 251 acting on the bare optical fiber 14 increases to counteract the tension-induced downward displacement.

As one illustrative example, the fluid bearing 220 comprises a radius of about 7.62 centimeters and a fiber slot 252 having a constant channel width WC sized such that the gaps between an example bare optical fiber 14 and each inner face 242, 244 are about 0.001 centimeters when the bare optical fiber 14 is centered within the fiber slot 252. The example fluid bearing 220 comprising a plurality of relief vents 272 extending from the inner faces 242, 244 through the plates 230, 232, to the outer faces 243, 245. The illustrative relief vents 272 are about 0.076 centimeters high radially, 0.015 centimeters wide azimuthally, have a thickness between the inner faces 242, 244 and the outer faces 243, 245 of about 0.76 centimeters , and which are spaced, for example, about every 4 degrees azimuthally. In this illustrative example, when the bare optical fiber is drawn with 200 grams of tension, it will be positioned within the fiber slot 252 at the vertical location of the bottom of the relief vents 272 and when it is drawn with 10 grams of tension, it will be positioned within the fiber slot 252 at the vertical location of the top of the relief vents 272.

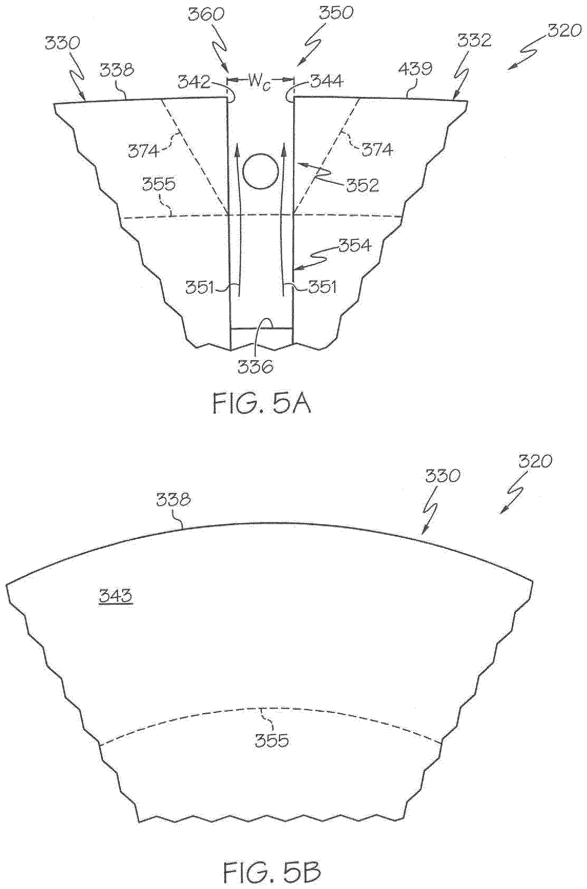

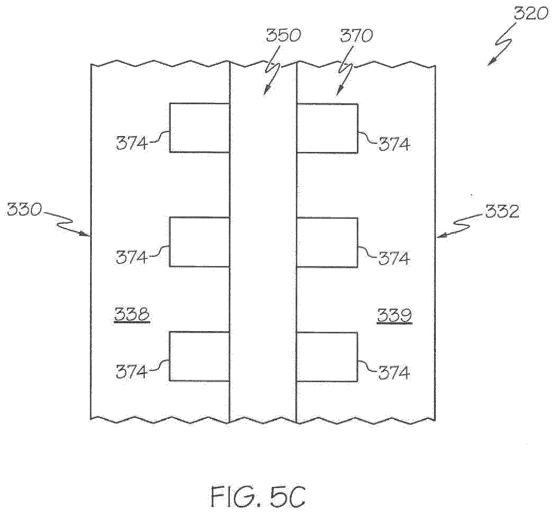

Referring now to FIGS. 5A-5C, a fluid bearing 320 is depicted. FIG. 5A depicts a partial side plan view of the fluid bearing 320, FIG. 5B depicts a partial front plan view of the fluid bearing 320, and FIG. 5C depicts a partial top plan view of the fluid bearing 320. Similar to the fluid bearing 220 of FIGS. 4A and 4B, the fluid bearing 320 comprises a fiber support channel 350 with a fiber slot 352 extending radially inward from arcuate outer surfaces 338, 339 of first and second plates 330, 332 to a fiber channel boundary 355 and a fluid slot 354 positioned radially inward from the fiber slot 352. The fluid bearing 320 also includes an inner member 336 disposed between the first plate 330 and second plate 332 to provide a gap there between. As depicted in FIG. 5A, the channel width WC of the fiber slot 352 is constant through the depth of the fiber slot 352. Thus, the pressure differential caused by fluid flow through the fiber support channel 350 is not altered by the change in channel width WC as the vertical position of the bare optical fiber 14 within the fiber slot 352 changes.

Instead, as depicted in FIGS. 5A and 5C, the fluid bearing 320 includes pressure relief regions 370 that comprise relief slots 374 that extend into one or both of the inner faces 342, 344 of the plates 330, 332 but, unlike the relief vents 272 of FIG. 4B, relief slots 374 penetrate only partially into the inner faces 342, 344 and do not extend to outer faces 343, 345 of the plates 330, 332. As illustrated by the outer face 343 of the first plate 330 depicted in FIG. 5B, the relief slots 374 do not extend through first plate 330 to the outer face 343. Instead, as depicted in FIGS. 5A and 5C, the relief slots 374 extend into the inner faces 342, 344 at azimuthally spaced locations, between the fiber channel boundary 355 and the arcuate outer surfaces 338, 339, providing a fluid pathway that is unimpeded by the bare optical fiber 14. Further, in the embodiments depicted in FIGS. 5A and 5C, the relief slots 374 are angled such that the relief slots 374 extend farther into the inner faces 342, 344 at locations nearer the arcuate outer surfaces 338, 339; however, embodiments comprising straight relief slots 374 (i.e. relief slots 374 with constant cross-sectional area in the radial direction) are also contemplated. In operation, because fluid will flow out of the relief slots 374 and thus out of the fluid bearing 320 when it comes in contact with the relief slots 374 for any given pressure of fluid 351 exerted into the fiber slot 352, there will be less fluid pressure to support the bare optical fiber 14 at higher locations within the fiber slot 352 (e.g., the nearer the bare optical fiber 14 is to the opening 360 of the fiber support channel 350) and thus a lower upward force acting on the bare optical fiber 14 by fluid 351.

While not intending to be limited by theory, when the bare optical fiber 14 is at a higher position within the fiber slot 352, the area of the relief slots 374 below the bare optical fiber 14 is larger and the portion of the flow pattern of fluid 351 that passes through relief slots 374 increases. As a result, the portion of the flow pattern of fluid 351 that supports (levitates) the bare optical fiber 14 decreases and the upward force (pressure) from fluid 351 that acts on the bare optical fiber 14 decreases. As the bare optical fiber 14 moves upward in fiber slot 352, the force (pressure) of fluid 351 acting on the bare optical fiber 14 decreases to counteract the tension-induced upward displacement. Conversely, when the bare optical fiber 14 is at a lower position within the fiber support channel 350, the area of the relief slots 374 below the bare optical fiber 14 is smaller and the portion of the flow pattern of fluid 351 that passes through relief slots 374 decreases. As a result, the portion of the flow pattern of fluid 351 that supports (levitates) the bare optical fiber 14 increases and the upward force (pressure) from fluid 351 acting on the bare optical fiber 14 increases. As the bare optical fiber 14 moves downward in fiber slot 352, the force (pressure) of fluid 351 acting on the bare optical fiber 14 increases to counteract the tension-induced downward displacement. Thus, as the draw tension on the bare optical fiber 14 changes, the bare optical fiber 14 can still be retained within the fiber slot 352, even in embodiments in which the inner faces 342, 244 of the fiber slot 352 are parallel to one another, because as the bare optical fiber 14 moves up (e.g., radially outward) within the fiber slot 352, more fluid escapes through the relief slots 374, thereby reducing the pressure differential beneath the bare optical fiber 14, causing the bare optical fiber 14 to cease moving upward in the fiber slot 352.

As one illustrative example, the fluid bearing 320 comprises a radius of about 7.62 centimeters and a fiber slot 352 having a constant channel width WC sized such that the gaps between an example bare optical fiber 14 and each inner face 342, 344 are about 0.001 centimeters when the bare optical fiber 14 is centered within the fiber slot 352. The example fluid bearing 320 also include a plurality of relief slots 374 extending into the inner faces 342, 344 of the plates 330, 332 and which are about 0.064 centimeters high radially, 0.038 centimeters wide azimuthally, extend a depth into the inner faces 342, 344 at the arcuate outer surfaces 338, 339 (e.g., the deepest point) of about 0.025 centimeters , and which are spaced, for example, about every 4 degrees azimuthally. In this illustrative example, when the bare optical fiber is drawn with 200 grams of tension, it is positioned within the fiber slot 352 at the vertical location of the bottom of the relief slots 374 and when it is being drawn with 10 grams of tension, it is positioned within the fiber slot 352 at the vertical location of the top of the relief slots 374.

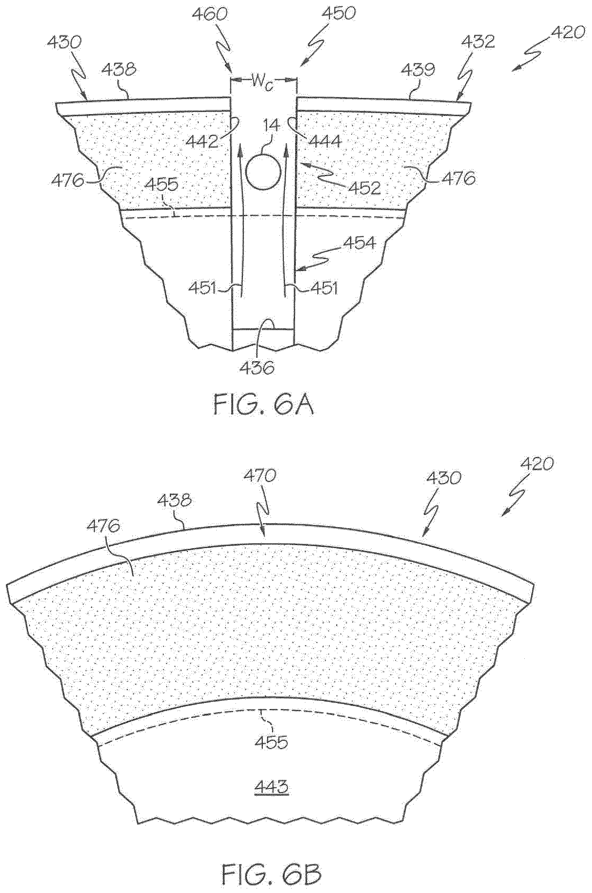

Referring now to FIGS. 6A and 6B, a fluid bearing 420 is depicted. FIG. 6A depicts a partial side plan view of the fluid bearing 420 and FIG. 6B depicts a partial front plan view of the fluid bearing 420. Similar to the fluid bearings 120, 220, and 320 of FIGS. 3A-5C, the fluid bearing 420 comprises a fiber support channel 450 having a fiber slot 452 extending radially inward from arcuate outer surfaces 438, 439 of first and second plates 430, 432 to a fiber channel boundary 455 and a fluid slot 454 positioned radially inward from the fiber slot 452. The fluid bearing 420 also includes an inner member 436 disposed between the first plate 430 and second plate 432 to provide a gap there between. As depicted in FIG. 6A, the channel width WC of the fiber slot 452 is constant through the depth of the fiber slot 452. Thus the pressure differential caused by fluid flow through the fiber support channel 450 is not altered by the change in channel width WC as the vertical position of the bare optical fiber 14 within the fiber slot 452 changes.

Instead, as depicted in FIGS. 6A and 6B, the fluid bearing 420 includes pressure release regions 470 that comprise one or more porous material regions 476 disposed within the inner faces 442, 444 of the first and second plates 430, 432 at the radial position of the fiber slot 452 of the fiber support channel 450 to allow fluid to escape through the inner faces 442, 444 of the fiber support channel 450 through the outer faces 443, 445 of the fluid bearing 430. Outer face 443 of first plate 430 is depicted in FIG. 6B. The one or more porous material regions 476 may comprise porous metal media such as is formed by sintering of beds of metals so that porosity is trapped in the metal during the sintering process. Such porous metal media is available, for example, from Applied Porous Technologies, Tariffville, Conn., USA. Other embodiments of porous media include ceramic porous media. While not intending to be limited by theory, because fluid will flow out of the fiber support channel 450 through the porous material regions 476, there will be less fluid flow through the fiber support channel 450 and thus less fluid force (pressure) to support the bare optical fiber 14 as the bare optical fiber 14 moves upward (radially outward) within the fiber support channel 450. Consequently, as the draw tension on the bare optical fiber 14 is decreased and upward displacement of the bare optical fiber 14 is induced, the bare optical fiber 14 can still be retained within the fiber slot 452 even if the inner faces 442, 444 forming the fiber slot 452 are parallel to one another, as depicted in FIG. 6A. As the bare optical fiber 14 moves upward (e.g., radially outward) within the fiber slot 452, more of fluid 451 escapes through the one or more porous material regions 476, thereby reducing the pressure differential beneath the bare optical fiber 14 and causing the bare optical fiber 14 to cease moving upward (e.g., radially outward) in the fiber slot 452. As the bare optical fiber 14 moves upward in fluid slot 452, a larger portion of the flow pattern of fluid 451 passes through porous material regions 476 and a smaller portion of the flow pattern of fluid 451 supports (levitates) the bare optical fiber 14. As a result, the upward force (pressure) from fluid 451 acting on the bare optical fiber 14 is reduced to counteract the tension-induced upward displacement of the bare optical fiber 14. As the bare optical fiber 14 moves upward in fiber slot 452, the force (pressure) of fluid 451 acting on the bare optical fiber 14 decreases to counteract the tension-induced upward displacement. Similarly, when the draw tension increases, a downward displacement of the bare optical fiber 14 in fiber slot 452 occurs. As the bare optical fiber 14 moves downward in fiber slot 452, a smaller portion of the flow pattern of fluid 451 passes through the porous material regions 476 and a larger portion of the flow pattern of fluid 451 supports (levitates) the bare optical fiber 14 to provide an increased upward force (pressure) that acts to counteract the tension-induced downward displacement. As the bare optical fiber 14 moves downward in fiber slot 452, the force (pressure) of fluid 451 acting on the bare optical fiber 14 increases to counteract the tension-induced downward displacement.

Referring again to FIGS. 1-6B, it should be understood that the optical fiber production system 100 may comprise fluid bearings having the various configurations described above and moreover, any single fluid bearing of the optical fiber production system 100 may comprise any combination of these configurations. In operation, each of the fluid bearings 120, 220, 320, 420 comprise configurations designed to achieve tension compensation and retain the bare optical fiber 14 within the fiber slot 152, 252, 352, 452. However, rapid fluctuations of the vertical (e.g., radial) location of the bare optical fiber 14 within the fiber slot 152, 252, 352, 452 may cause the bare optical fiber 14 to exit the fiber slot 152, 252, 352, 452. For example, rapid upward radial movement of the bare optical fiber 14 may cause the bare optical fiber 14 to exit the opening 160, 260, 360, 460 and rapid downward radial movement may cause the bare optical fiber 14 to either mechanically contact or enter the fluid slot 154, 254, 354, 454. In particular, the bare optical fiber 14 may contact the fluid slot 154, 254, 354, 454 when the width of the fluid slot 154, 254, 354, 454 is less than the diameter of the bare optical fiber 14 and may enter the fluid slot 154 the fluid slot 154, 254, 354, 454 when the width of the fluid slot 154, 254, 354, 454 is greater than the diameter of the bare optical fiber 14.

While not intending to be limited by theory, rapid vertical movement of the bare optical fiber may be caused by rapid variations in draw tensions (e.g., increases or decreases), changes in the diameter of the bare optical fiber, and vibrations of the bare optical fiber, which may increase in embodiments of the optical fiber production system having an increased number of fluid bearings. While not intended to be limited by theory, portions of optical fiber between fluid bearings (e.g., different "fiber legs") may form coupled vibrational oscillators having distinct natural frequencies that may be amplified by an increased number of "fiber legs" along the draw pathway. Moreover, when the vertical position of the bare optical fiber drops rapidly in the fiber slot due to increased draw tension, downward forces on the bare optical fiber can be momentarily augmented (e.g., increased) by inertial effects, further exacerbating the rapid height change.

Rapid vertical movement is a particular challenge for fluid bearings that have notches at their entrances and exits (i.e., cross sectional cuts in the fiber support channel configured such that the bare optical fiber enters into and emerges from the fiber support channel at ninety degrees). While not intending to be limited by theory, the portions of the bare optical fiber that are immediately upstream the entrance of the fluid bearing and immediately downstream the exit of the fluid bearing are rigidly linked via axial stiffness to the portion of the bare optical fiber that is disposed in the fiber support channel, but no upward force is applied to these exteriorly positioned portions of the bare optical fiber because these portions are outside the fluid bearing and are not subjected to a levitating fluid flow. This increases the ratio of the effective fiber inertia to the upward force for the portion of the bare optical fiber in the fluid slot of a fluid bearing, and as such, increases the likelihood of the bare optical fiber mechanically contacting and/or entering the fluid slot of the fiber support channel.

Mechanical contact between the bare optical fiber and the fluid slot (e.g., mechanical contact between the bare optical fiber and the portions of the inner walls that define the fluid slot) may damage the bare optical fiber, causing a reduction in fiber strength and in some instances, fiber breakage. Even if the bare optical fiber does not immediately break, mechanical contact with the fluid slot will often cause a flaw in the surface of the bare optical fiber that is large enough to cause the bare optical fiber to break during subsequent tensile testing. Breaks in the bare optical fiber will cause a reduction in the length of the resultant fiber (making it less desirable to customers) and a need to stop and restart the fiber draw process. Further, if a minimum salable length has not been reached during tensile testing prior to the break, the entire fiber length prior to the break may not be useful. It is also undesirable for fluctuations in tension to cause downward displacements of the bare optical fiber into the fluid slot. The fluid slot most commonly has a constant width between opposing inner surfaces, which means that no variation in upward force (pressure) acting on the bare optical fiber occurs as the bare optical fiber moves deeper into the fluid slot. As a result, once the bare optical fiber enters the fluid slot, it is likely that the tension or tension fluctuation that induced the downward displacement of the fiber into the fluid slot will cause the fiber to contact the bottom surface of the fluid slot. Thus, it is desirable to modify the fluid bearing to reduce instances of the bare optical fiber entering or mechanically contacting the fluid slot.

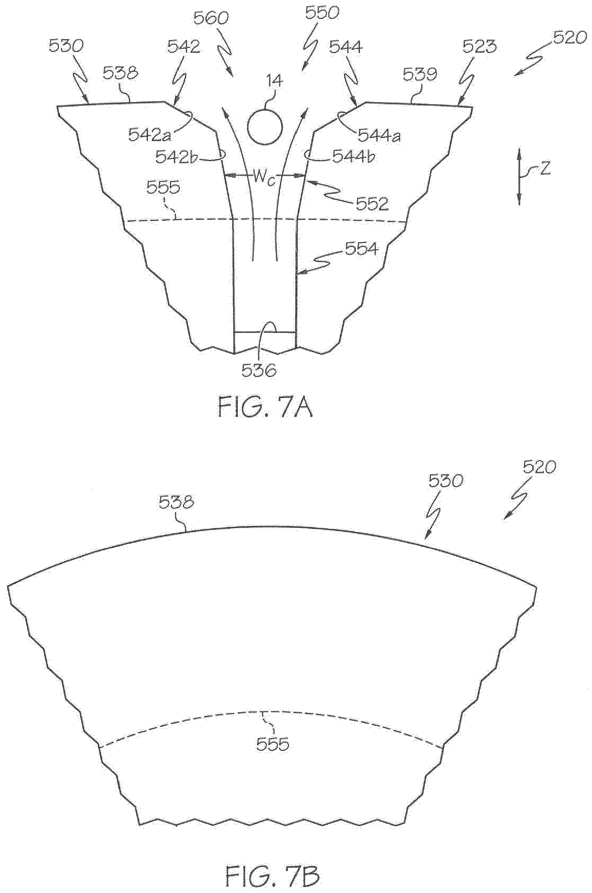

Referring now to FIGS. 7A-11B, examples of the fluid bearing are depicted that are configured to reduce the likelihood of the bare optical fiber entering or mechanically contacting the fluid slot of the fiber support channel. For example, in the embodiments of FIGS. 7A-11B the fluid bearing comprises alternative fluid slot and/or pressure release region configurations that are designed to increase the fluid resistance to downward displacement caused by fluctuations in tension. The resistance to downward displacement corresponds to the work per unit distance required to move the bare optical fiber in a radially inward direction to a position deeper in the fiber slot. As the work per unit distance increases, the fluctuation in tension needed to displace the bare optical fiber from its stabilized equilibrium position to a deeper position in the fiber slot increases. Stated alternatively, as the work per unit distance in the downward direction increases, the tension-induced downward displacement caused by a given fluctuation in tension decreases to provide greater consistency in the position of the bare optical fiber in the fiber slot and to reduce the probability that the bare optical fiber will enter the fluid slot.

The work per unit distance needed to move the fiber deeper into a fiber slot of given depth, given width at its opening, and given width at its fiber channel boundary may be increased relative to a reference fiber slot configuration with inner surfaces tapered at a constant angle (e.g. a fiber slot design of the type shown in FIG. 3A, which shows tapered inner surfaces 142, 144 for fiber slot 152 having a constant slope or angle between opening 160 and fiber channel boundary (155) and having the same depth, same width at its opening and same width at its fiber boundary channel. While not intending to be limited by theory, if the average work required to move the bare optical fiber per unit distance from the top to the bottom of the fiber slot is greater than the momentary kinetic energy of the bare optical fiber as it moves downward in the fiber slot (e.g., due to tension-induced downward displacement as described above), the bare optical fiber will not enter or mechanically contact the fluid slot.

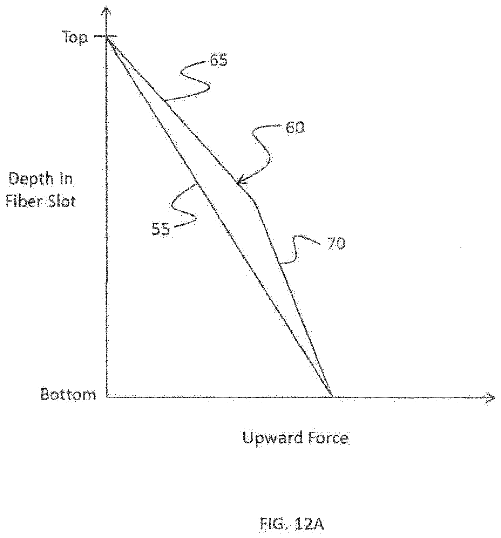

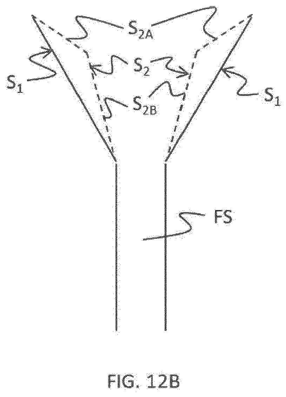

By way of example, reference is made to FIG. 12A. FIG. 12A is a graph 50 that shows force curves for fiber slots of two designs (fiber slot S1 and fiber slot S2). A force curve represents the functional relationship between the vertical (e.g., radial) position of the bare optical fiber in the fiber slot and the upward force of the levitating fluid that acts on the bare optical fiber. Trace 55 shows the force curve for fiber slot S1 and trace 60 shows the force curve for fiber slot S2. The designs of fiber slot S1 and fiber slot S2 are shown in FIG. 12B. The upward force is the force associated with the portion of the fluid flow that acts on a bare optical fiber positioned in each of fiber slots S1 and S2. For purposes of illustration, fiber slot S1, fiber slot S2, and the draw tension have been configured so that the upward fluid force acting on the bare optical fiber is 10 grams when the bare optical fiber is positioned at the top of fluid slot S1 or the top of fiber slot S2 and the upward fluid force acting on the bare optical fiber is 200 grams when the bare optical fiber is positioned at the bottom of fiber slot S1 or the bottom of fiber slot S2. Upward fluid forces in the range from 10 grams - 200 grams are commonly encountered in practical operation.

The top of the fiber slot corresponds to the opening of the fiber slot (e.g. openings 160, 260, 360, and 460 of FIGS. 3A, 4A, 5A, and 6A, respectively). The bottom of the fiber slot corresponds to the fiber channel boundary, which represents the interface between the fiber slot and fluid slot (e.g. fiber channel boundaries 155, 255, 355, and 455 of FIGS. 3A, 4A, 5A, and 6A, respectively). The position of the fiber is referred to as "Depth in Fiber Slot" in FIG. 12A and extends from the top of the fiber slot to the bottom of the fiber slot. The direction from the center of the top of the fiber slot to the center of the bottom of the fiber slot is a depth direction. For purposes of illustration, the position of the fiber in the fiber slot is presented in arbitrary units. The principles disclosed herein underlying performance of the illustrative fiber slots S1 and S2 apply generally to fiber slots of any depth or width, as well as to upward fluid force regimes other than the illustrative 10 grams - 200 grams regime depicted in FIG. 12A.

Fiber slot S1 is depicted in FIG. 12B as a solid line and has a design of the type shown in FIG. 3A. The inner faces of fiber slot S1 are tapered at a constant angle or constant slope from top to bottom. The bottom of fiber slot S1 occurs at the inner termination point of the taper, which corresponds to the fluid channel boundary and entrance to the fluid slot. Fiber slot S2 is depicted in FIG. 12B as a dashed line and has inner faces of non-constant angle or non-constant slope from top to bottom. More specifically, fiber slot S2 includes an upper section S2A adjacent to the top and a lower section S2B adjacent to the bottom. Each of sections S2A and S2B is tapered at a constant angle or constant slope, but the constant angle and constant slope differ for sections S2A and S2B. Force curves for sections S2A and S2B are shown as traces 65 and 70, respectively, in FIG. 12A. For purposes of illustration, fiber slots S1 and S2 have a common fluid slot FS.

The portions of the inner face of fiber slot S2 corresponding to sections S2A and S2B are referred to herein as wall regions of fiber slot S2. The inner face of fiber slot S2 includes a wall region associated with section S2A and a wall region associated with section S2B, where the wall region of section S2A differs in angle and slope of taper from wall region of section S2B. For purposes of description and comparison, the angle and slope of taper are determined in terms of magnitude relative to the central axis of the fiber slot. The central axis extends in the radial direction and is centered in the width direction of the fiber slot. Relative to the central axis, the angle of taper of the wall region of section S2A is greater than the angle of taper of the wall region of section S2B and the slope of the wall region of section S2A is greater than the slope of the wall region of section S2B.

Fiber slots S1 and S2 have the same height (e.g., the same distance between the opening of the fiber slot (top) and the fluid channel boundary (bottom)), and the same widths at the top and bottom positions. Fiber slots S1 and S2 are configured so that the upward fluid force acting on the bare optical fiber is the same at the top (10 grams) and bottom (200 grams) of fiber slots S1 and S2 (see FIG. 12A). Because of differences in the shape of the inner faces, however, the upward fluid force acting on the bare optical fiber at intermediate positions between the top and bottom positions differs for fiber slots S1 and S2. Specifically, for a given intermediate position, the upward fluid force acting on a bare optical fiber is higher for fiber slot S2 than for fiber slot S1. Since the upward fluid force resists downward motion of the bare optical fiber, the work needed to move a bare optical fiber deeper into the fiber slot is higher for fiber slot S2 than for fiber slot S1. The overall work needed to cause the bare optical fiber to move from the top of the fiber slot to the bottom of the fiber slot against the upward fluid force is given by the area under the graphical depiction of the functional relationship between position in the fiber slot and the upward fluid force opposing downward motion of the bare optical fiber. For fiber slot S1, the work required to move the bare optical fiber from the top of the fiber slot to the bottom of the fiber slot corresponds to the triangular area enclosed by force curve 55 and the two coordinate axes. For fiber slot S2, the work required to move the bare optical fiber from the top of the fiber slot to the bottom of the fiber slot corresponds to the polygonal area defined by force curves 65 and 70 for sections S2A and S2B, respectively, and the two coordinate axes.

Since the area for fiber slot S2 is greater than the area for fiber slot S1, more work is required to move a bare optical fiber from the top of fiber slot S2 to the bottom of the fiber slot S2 than is required to move a bare optical fiber from the top of fiber slot S1 to the bottom of the fiber slot S1. The position of a bare optical fiber in fiber slot S2 is thus more stable and less likely to make mechanical contact with the fiber slot or fluid slot than in fiber slot S1 when subjected to downward displacements induced by momentary increases in draw tension.

Thus, while not intending to be limited by theory, because of the shape of the force curve (functional dependence of fiber position in the radial direction on upward fluid force) of fiber slot S2, at any vertical position between the opening and the fluid channel boundary of fiber slots S1 and S2, the upward force on the bare optical fiber due to fluid flow within the fiber slot will be greater in fiber slot S2 than in fiber slot S1 and as such, the integral of force over distance (e.g., work, which corresponds to the area under the force curve) is greater in fiber slot S2 than in fiber slot S1. Thus, more work is required to move the bare optical fiber from the opening to the fluid channel boundary in fiber slot S2 than in fiber slot S1. In other words, fiber slot S2 will dissipate more of the momentary kinetic energy of the bare optical fiber as it moves deeper into the fiber slot prior to the fiber reaching the fluid slot such that a bare optical fiber disposed in fiber slot S2 is less prone to enter or mechanically contact the fluid slot than a bare optical fiber disposed in fiber slot S1.

Moreover, while still not intending to be limited by theory, the upward force on the optical fiber induced by the fluid flow through the fiber support channel is a dissipative force such that the energy required to move bare optical fiber downward in the fiber slot is path dependent. Each of the fluid bearings of FIGS. 7A-11B, described below, is designed to provide a functional dependence of fiber position on upward fluid force that increases the work needed to cause the bare optical fiber to move a given distance in the downward direction relative to a fluid slot design having a taper of constant angle or constant slope from the top position to the bottom position and the same widths at the top and bottom positions. As such, when using the fluid bearings of FIGS. 7A-11B, the kinetic energy required for the bare optical fiber to enter or mechanically contact the fluid slot may be increased (e.g. by about 20%, or about 30%, or about 50%, or about 60%) when compared to fluid bearing designs having a purely linear force curve (defined as a force curve having a constant taper from the top of the fiber slot to the bottom of the fiber slot, such as the force curve of fiber slot S1 shown in Fig. 12A). Moreover, while the fiber slot S2 of FIG. 12A and 12B is depicted as comprising a two-slope force curve, fiber slot designs are contemplated that comprise three, four, or more linear segments of the force curve (e.g. three, four, or more slopes or tapers in the force curve), or a continuously changing convex slope force curve. In other words, as long as the magnitude of the slope of the force curve monotonically increases at locations within the fiber slot approaching the fiber channel boundary, more work will be required for the bare optical fiber to enter or mechanically contact the fluid slot.

The principles leading to increased work of downward displacement, better stability of fiber position, and a lesser tendency of mechanical contact of the fiber with the fluid slot described for fiber slot S2 relative to fiber slot S1 apply to fiber slot designs having a force curve that is convex in shape. A convex shape is a shape that increases the area under the force curve relative to a purely linear force curve having the same forces at the top and bottom of the fiber slot. Convex force curves can include linear segments, curved segments, or a combination of linear and curved segments. Relative to a purely linear force curve, a convex force curve includes a linear segment or curved segment having a slope magnitude that is less than the slope magnitude of the purely linear force curve. For purposes of describing force curves or force curve segments, slope refers to slope of the force curve or force curve segment in a plot of fiber position in the fiber slot (as expressed in terms of radial position with the top of the fiber slot having a larger radial position than the bottom of the fiber slot (e.g. as shown in FIG. 12 A)) as a function of upward force. Magnitude of slope or slope magnitude refers to the absolute value of slope. The steeper the force curve or force curve segment is, the greater the magnitude of slope (irrespective of the sign of the slope). For linear segments, slope refers to the slope of the segment. For curved segments, slope refers to the slope of a line tangent to the curved segment.

The slope of a linear segment or a line tangent to a curved segment can be defined by the angle of the linear segment or line tangent to a curved segment relative to the central axis of the fiber slot. The angle of a linear segment or a line tangent to a curved segment is greater than 0°, or greater than 0.1°, or greater than 0.2°, or greater than 0.3°, greater than 0.4°, or in the range from 0° to 10°, or in the range from 0.1° to 9°, or in the range from 0.2° to 8°, or in the range from 0.3° to 7°, or in the range from 0.4° to 5°.

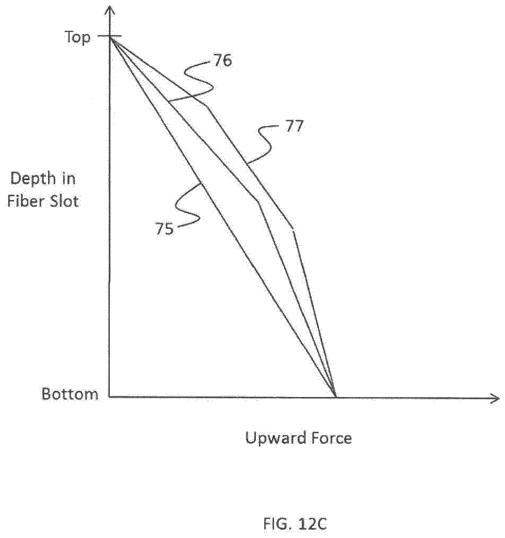

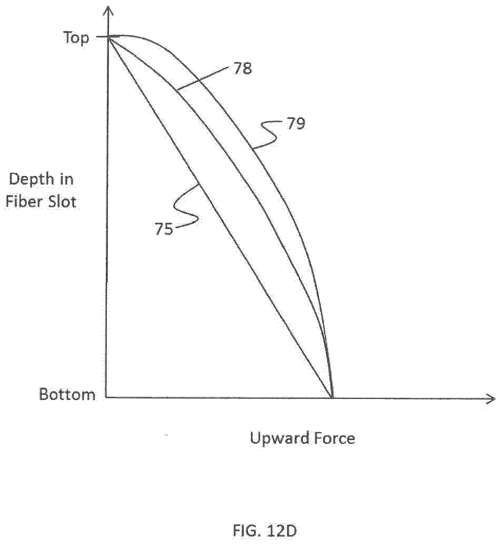

FIG. 12C shows examples of convex force curves having linear segments and FIG. 12D shows examples of convex force curves having curved segments. In FIGS. 12C and 12D, force curve 75 is a purely linear force curve included as a reference. A purely linear force curve is a non-convex force curve. In FIG. 12C, force curves 76 and 77 are convex force curves and have the same force at the top and bottom of the fiber slot as force curve 75. Convex force curve 76 has two linear segments (two slopes or two tapers) and convex force curve 77 has three linear segments (three slopes or three tapers). The area under convex force curve 77 is greater than the area under convex force curve 76, which is greater than the area under purely linear force curve 75. The work required to move the fiber from the top of the fiber slot to the bottom of the fiber slot is greater for convex force curve 77 than for convex force curve 76 and the work required to move the fiber from the top of the fiber slot to the bottom of the fiber slot is greater for convex force curve 76 than for purely linear force curve 75. Further embodiments include force curves having four or more linear segments.

The convex force curve can include two or more linear segments where one of the linear segments has a slope magnitude less than the slope magnitude of a purely linear force curve having the same force at the top and bottom of the fiber slot as the convex force curve and another of the linear segments has a slope magnitude greater than the slope magnitude of a purely linear force curve having the same force at the top and bottom of the fiber slot as the convex force curve. The linear segment having a slope magnitude less than the slope magnitude of the purely linear force curve may be closer to the bottom of the fiber slot than the linear segment having a slope magnitude greater than the slope magnitude of the purely linear force curve. The linear segment having a slope magnitude less than the slope magnitude of the purely linear force curve may be closer to the top of the fiber slot than the linear segment having a slope magnitude greater than the slope magnitude of the purely linear force curve.
In convex force curves having multiple linear segments, the difference in angle of two adjacent linear segment is greater than 0°, or greater than 0.1°, or greater than 0.2°, or greater than 0.3°, greater than 0.4°, or in the range from 0° to 10°, or in the range from 0.1° to 9°, or in the range from 0.2° to 8°, or in the range from 0.3° to 7°, or in the range from 0.4° to 5°.

FIG. 12D shows convex force curves 78 and 79. Convex force curves 78 and 79 are curved force curves. The area under convex force curve 79 is greater than the area under convex force curve 78, which is greater than the area under purely linear force curve 75. The work required to move the fiber from the top of the fiber slot to the bottom of the fiber slot is greater for convex force curve 79 than for convex force curve 78 and the work required to move the fiber from the top of the fiber slot to the bottom of the fiber slot is greater for convex force curve 78 than for purely linear force curve 75.

The convex force curve can be a curved force curve that includes two or more points where the tangent to one of the points has a slope magnitude less than the slope magnitude of a purely linear force curve having the same force at the top and bottom of the fiber slot as the convex force curve and the tangent to another of the points has a slope magnitude greater than the slope magnitude of a purely linear force curve having the same force at the top and bottom of the fiber slot as the convex force curve. The point having a slope magnitude less than the slope magnitude of the purely linear force curve is closer to the bottom of the fiber slot than the point having a slope magnitude greater than the slope magnitude of the purely linear force curve. The point having a slope magnitude less than the slope magnitude of the purely linear force curve can be closer to the top of the fiber slot than the point having a slope magnitude greater than the slope magnitude of the purely linear force curve.

In convex curved force curves having at least two tangent lines that differ in slope at different points along the force curve, the difference in angle of the at least two tangent lines is greater than 0°, or greater than 0.1°, or greater than 0.2°, or greater than 0.3°, greater than 0.4°, or in the range from 0° to 10°, or in the range from 0.1° to 9°, or in the range from 0.2° to 8°, or in the range from 0.3° to 7°, or in the range from 0.4° to 5°.

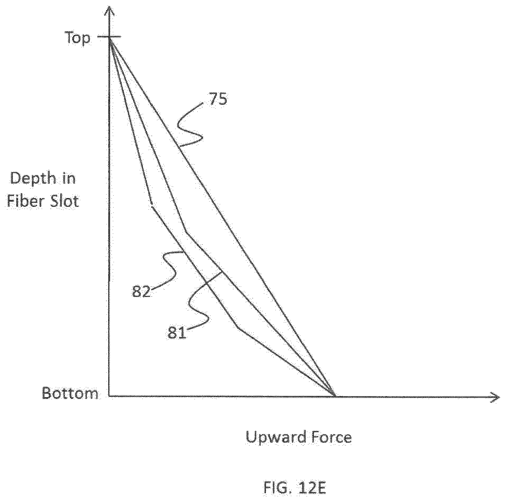

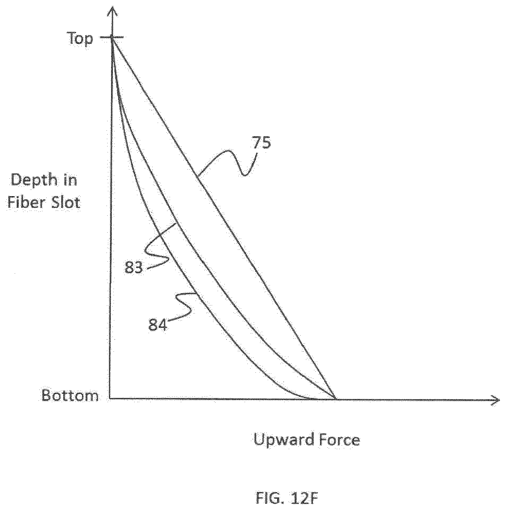

FIGS. 12E and 12F show examples of non-convex force curves. Purely linear force curve 75 is one example of a non-convex force curve. FIG. 12E shows non-convex force curves 81 and 82 that have two and three linear segments, respectively. The area under non-convex force curve 82 is less than the area under non-convex force curve 81, which is less than the area under purely linear force curve 75. The work required to move the fiber from the top of the fiber slot to the bottom of the fiber slot is less for non-convex force curve 82 than for non-convex force curve 81 and the work required to move the fiber from the top of the fiber slot to the bottom of the fiber slot is less for non-convex force curve 81 than for purely linear force curve 75.

FIG. 12F shows non-convex force curves 83 and 84 that have one or more curved segments. The work required to move a fiber from top to bottom in a fiber slot having a non-convex force curve is less than the work required to move the fiber from top to bottom in a fiber slot having a convex force curve when the same upward force is present at the top of the fiber slots having convex and non-convex force curves and the same upward force is present at the bottom of the fiber slots having convex and non-convex force curves.

The area under non-convex force curve 84 is less than the area under non-convex force curve 83, which is less than the area under purely linear force curve 75. The work required to move the fiber from the top of the fiber slot to the bottom of the fiber slot is less for non-convex force curve 84 than for non-convex force curve 83 and the work required to move the fiber from the top of the fiber slot to the bottom of the fiber slot is less for non-convex force curve 83 than for purely linear force curve 75.

FIGS. 7A - 11B and 13A - 14 show fiber slot designs that have convex force curves.

Referring now to FIGS. 7A and 7B, a fluid bearing 520 configured to increase the energy required to move the bare optical fiber 14 from an opening 560 to a fiber channel boundary 555 is depicted. In particular, FIG. 7A depicts a partial side plan view of the fluid bearing 520, and FIG. 7B depicts a partial front plan view of the fluid bearing 520 showing an outer face 543 of a first plate 530. Similar to the fluid bearing 120 of FIGS. 3A and 3B, the fluid bearing 520 comprises a fiber support channel 550 with a fiber slot 552 extending radially inward from arcuate outer surfaces 538, 539 of first and second plates 530, 532 to the fiber channel boundary 555 and a fluid slot 554 positioned radially inward from the fiber slot 552. The fluid bearing 520 also includes an inner member 536 is disposed between the first plate 530 and second plate 532 to provide a gap there between.

As depicted in FIG. 7A, similar to the fluid bearing 120 of FIGS. 3A and 3B, the channel width WC of the fiber slot 552 is variable through the depth of the fiber slot 552, decreasing as the bare optical fiber 14 approaches the fiber channel boundary 555. However, the fiber slot 552 is defined by two slot wall regions 542a, 542b, 544a, 544b of each inner face 542, 544, which are tapered at different angles with respect to a Z axis (the upward/downward radial axis that defines the depth of the bare optical fiber 14 in the fiber slot 552). The first slot wall regions 542a, 544a extend from the arcuate outer surfaces 538, 539 to the second slot wall regions 542b, 544b, respectively, which extend from the first slot wall regions 542a, 544a to the fiber channel boundary 555. Further, the first slot wall regions 542a, 544a of each inner face 542, 544 are tapered at a first angle and the second slot wall regions 542b, 544b of each inner face 542, 544 are tapered at a second angle, wherein the first angle is larger with respect to the Z axis than the second angle. In other words, the slope magnitude of the first slot wall region 542a, 544a is greater than the slope magnitude of the second slot wall region 542b, 544b.

As an illustrative example, the fiber slot 152 of FIGS. 3A and 3B and the fiber slot 552 of FIGS. 7A and 7B comprise equivalent channel widths WC at their respective openings 160, 560 and equivalent channel widths WC at their respective fiber channel boundaries 155, 555, fluid flow within the fiber slots 152, 552 induces equivalent upward forces at the openings 160, 560 and induces equivalent upward forces at the fiber channel boundaries 155, 555. However, due to the multiple slot wall regions 542a, 542b, 544a, 544b and slopes thereof that define the fiber slot 552, wherein wall regions nearer the fiber channel boundary 555 (e.g., the second slot wall regions 542b, 544b) have smaller slopes, more upward force is induced by the fluid flow at all locations in the fiber slot 552 between the opening 560 and the fiber channel boundary 555 and as such, an increased amount of work is required for the bare optical fiber 14 to traverse fluid slot 552 to mechanically contact or enter the fluid slot 554 relative to fiber slot 152. The increased amount of work is a consequence of the convex force curve associated with fiber slot 552 relative to the purely linear force curve of fiber slot 152. Moreover, while two slot wall regions 542a, 542b, 544a, 544b are depicted, it should be understood that any number of slot wall regions are contemplated in which each successively lower (deeper, more radially inward) wall region comprises a smaller slope magnitude.

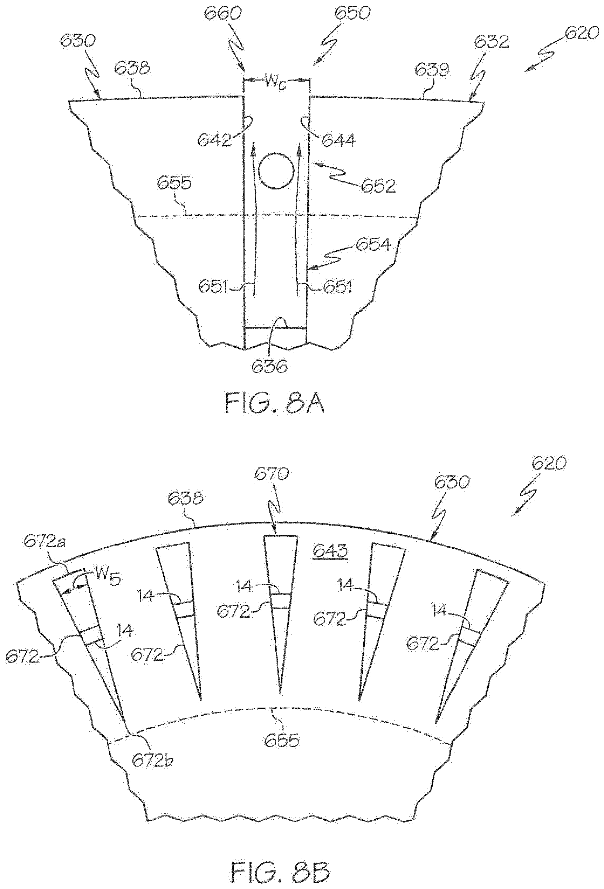

Referring now to FIGS. 8A and 8B, a fluid bearing 620 configured to increase the energy required to move the bare optical fiber 14 from an opening 660 to a fiber channel boundary 655 is depicted. In particular, FIG. 8A depicts a partial side plan view of the fluid bearing 620 and FIG. 8B depicts a partial front plan view of the fluid bearing 620 showing an outer face 643 of a first plate 630. The fluid bearing 620 comprises a fiber support channel 650 comprising a fiber slot 652 extending radially inward from arcuate outer surfaces 638, 639 of first and second plates 630, 632 to a fiber channel boundary 655 and a fluid slot 654 positioned radially inward from the fiber slot 652. The fluid bearing 620 also includes an inner member 636 disposed between the first plate 630 and second plate 632 to provide a gap there between. As depicted in FIG. 8A, the channel width WC of the fiber slot 652 is constant through the depth of the fiber slot 652. For example, the channel width WC of the fiber slot 652 is the same at the opening 660 and the fiber channel boundary 655.

Further, the fluid bearing 620 comprises pressure release regions 670 that comprise a plurality of relief vents 672 extending from one or both of the inner faces 642, 644, of the fiber support channel 650, through the outer faces (a single outer face 643 is depicted). As depicted in FIG. 8B, the plurality of relief vents 672 are azimuthally spaced such that portions of the bare optical fiber 14 disposed within the fluid bearing 620 are adjacent the relief vents 672 and portions of the bare optical fiber 14 are adjacent the inner faces 642, 644 that define the fiber slot 652. In operation, some of the fluid 651 flowing through the fiber slot 652 may exit the fluid bearing 620 through the first and second plates 630, 632 by flowing through the relief vents 672. In this embodiment, gap flow within the fiber slot 652 still occurs (e.g., flow between the bare optical fiber 14 and the inner faces 642, 644 that define the fiber slot 652), creating the upward and centration forces to maintain the bare optical fiber 14 within the fiber slot 652.

Further, the relief vents 672 depicted in FIG. 8B comprise a variable azimuthal width, such that each relief vent 672 is wider at the top (e.g., nearer the arcuate outer surface 638, 639) and narrower at the bottom (e.g., nearer the fiber channel boundary 655). While not intending to be limited by theory, relief vents 672 comprising a variable azimuthal width that is larger at the top (e.g., nearer the arcuate outer surfaces 638, 698) than the bottom (e.g., nearer the fiber channel boundary 655) cause an upward force to be induced by the fluid flow at all locations in the fiber slot 652 between the opening 660 and the fiber channel boundary 655 that is larger than the upward force induced by relief vents comprising a constant azimuthal width (e.g., relief vents 272 of FIG. 4B) and as such, an increased amount of work is required for the bare optical fiber 14 to travel downward in fiber slot 652 and mechanically contact or enter the fluid slot 654.

As one illustrative example, the fluid bearing 620 may comprise a radius of about 7.62 centimeters and a fiber slot 652 having a constant channel width WC. The example fluid bearing 620 includes a plurality of relief vents 672 that extend from the inner faces 642, 644 through the plates 630, 632, to the outer faces (a single outer face 643 is depicted in FIG. 8B) that are about 0.076 centimeters high radially, 0.015 centimeters wide azimuthally at the top and converge to a point at the bottom. Further, the thickness between the inner faces 642, 644 and the outer faces is about 0.76 centimeters and the relief vents 672 are spaced about every 4 degrees azimuthally. In this illustrative example, when the bare optical fiber is drawn with 200 grams of tension, it will be positioned within the fiber slot 652 at same the vertical location as the bottom of the relief vents 674 and when it is being drawn with 10 grams of tension, it will be positioned within the fiber slot 652 at same the vertical location as the top of the relief vents 674.

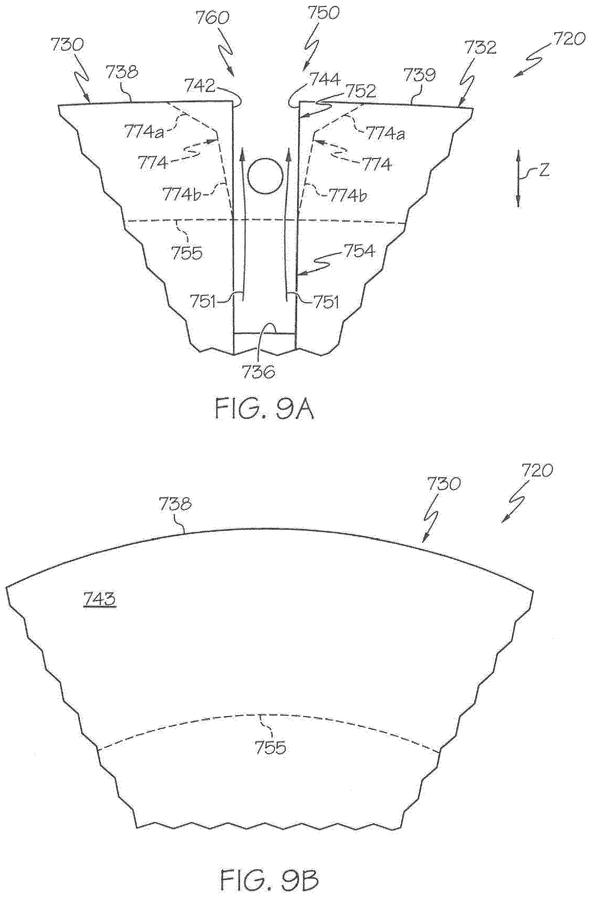

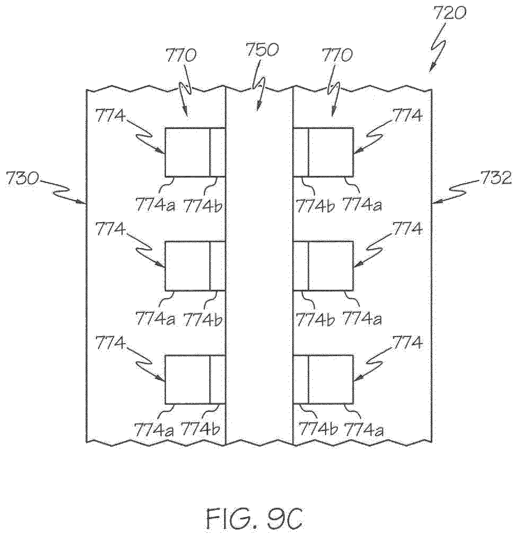

Referring now to FIGS. 9A-9C, a fluid bearing 720 configured to increase the energy required to move the bare optical fiber 14 from an opening 760 to a fiber channel boundary 755 is depicted. FIG. 9A depicts a partial side plan view of the fluid bearing 720, FIG. 9B depicts a partial front plan view of the fluid bearing 720 showing an outer face 743 of a first plate 730, and FIG. 9C depicts a partial top plan view of the fluid bearing 720. Similar to the fluid bearing 320 of FIGS. 5A-5C, the fluid bearing 720 comprises a fiber support channel 750 with a fiber slot 752 extending radially inward from arcuate outer surfaces 738, 739 of first and second plates 730, 732 to a fiber channel boundary 755 and a fluid slot 754 positioned radially inward from the fiber slot 752. The fluid bearing 720 also includes an inner member 736 disposed between the first plate 730 and second plate 732 to provide a gap there between. As depicted in FIG. 9A, the channel width WC of the fiber slot 752 is constant through the depth of the fiber slot 752.

Further, similar to the fluid bearing 320 of FIGS. 5A-5C, fluid bearing 720 includes pressure relief regions 770 that comprise relief slots 774 that extend into the inner faces 742, 744 of the plates 730, 732 at azimuthally spaced locations, between the fiber channel boundary 755 and the arcuate outer surfaces 738, 739, providing a fluid pathway that is unimpeded by the bare optical fiber 14. However, unlike the relief slots 374 of FIG. 5A-5C, the relief slots 774 comprise multiple relief slot segments 774a, 774b, each tapered at different angles with respect to a Z axis (e.g., the upward/downward radial axis corresponding to depth in the fiber slot 752 and that the bare optical fiber 14 may move in the fiber slot 752). The first relief slot segments 774a extend from the arcuate outer surfaces 738, 739 to the second relief slot segments 774b. The second relief slot segments 774b extend from the first relief slot segments 774a to the fiber channel boundary 755. Further, the first relief slot segments 774a are tapered at a first angle and second relief slot segments 774b are tapered at a second angle, wherein the first angle with respect to the Z axis is larger than the second angle. In other words, the slope of the first relief slot segments 774a is larger than the slope of the second relief slot segments 774b.

In operation, because fluid 751 will flow out of the relief slots 774 and thus out of the fluid bearing 720 when it comes in contact with the relief slots 774 for any given fluid pressure exerted into the fiber slot 752, there will be less fluid pressure to support the bare optical fiber 14 at higher locations within the fiber slot 752 (e.g., locations of the bare optical fiber 14 that are nearer to the opening 760 of the fiber support channel 750). Moreover, because the relief slots 774 comprise multiple relief slot segments 774a, 774b comprising decreasing slopes nearer the fiber channel boundary 755, the upward forces applied by the fluid flow between opening 760 at the arcuate outer surfaces 738, 739 and the fiber channel boundary 755 are increased when compared to a similarly sized relief slots having a constant slope (e.g., the relief slots 374 of FIGS. 5A-5C), and as such, an increased amount of work is required for the bare optical fiber 14 to traverse the fiber slot 752 in the downward direction to mechanically contact or enter the fluid slot 754. Moreover, while two relief slot segments 774a, 774b are depicted, it should be understood that any number of relief slot segments are contemplated in which each successively lower (deeper) positioned relief slot segment comprises a decreased slope (e.g., relief slot segments successively nearer the fiber channel boundary 755).

As one illustrative example, the fluid bearing 720 comprises a radius of about 7.62 centimeters and a fiber slot 752 having a constant channel width WC sized such that the gaps between an example bare optical fiber 14 and each inner face 742, 744 are about 0.001 centimeter when the bare optical fiber 14 is centered within the fiber slot 752. The example fluid bearing 720 also includes a plurality of relief slots 774 that extend into the inner faces 742, 744 of the plates 730, 732 and are about 0.064 centimeters high radially, 0.038 centimeters wide azimuthally, extend a depth into the inner faces 742, 744 at the arcuate outer surfaces 738, 739 (e.g., the deepest point) of about 0.025 centimeters, and which are spaced about every 4 degrees azimuthally. Further, the first relief slot segment 774a of the relief slot 774 extends radially inward from the arcuate outer surfaces 738, 739 to a depth of 0.25 centimeters at an angle of 2.6 degrees (with respect to the Z axis) and a second relief slot segment 774b that extends radially inward from the first relief slot segment 774a to the fiber channel boundary 755 at an angle of about 0.6 degrees (with respect to the Z axis). In this illustrative example, moving the bare optical fiber from the opening 760 of the fiber slot 752 to the fiber channel boundary 755 will require 1.8 times more work than in a fluid slot having similarly sized relief slots with a single angle of incline (e.g., the relief slots 374 of FIGS. 5A-5C).

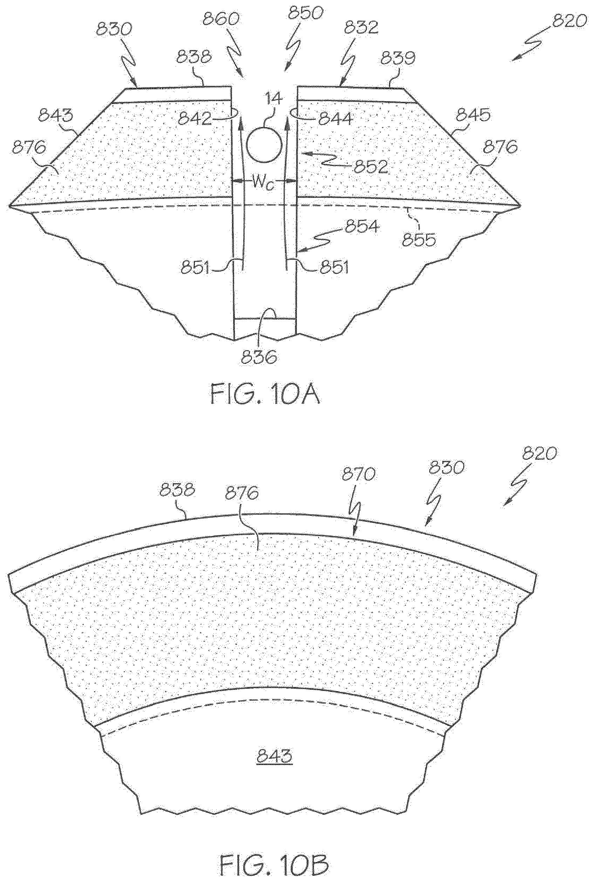

Referring now to FIGS. 10A and 10B, a fluid bearing 820 configured to increase the energy required to move the bare optical fiber 14 from an opening 860 to a fiber channel boundary 855 is depicted. FIG. 10A depicts a partial side plan view of the fluid bearing 820 and FIG. 10B depicts a partial front plan view of the fluid bearing 820 showing an outer face 843 of a first plate 830. Similar to the fluid bearings 420 of FIGS. 6A and 6B, the fluid bearing 820 comprises a fiber support channel 850 having a fiber slot 852 extending radially inward from arcuate outer surfaces 838, 839 of first and second plates 830, 832 to a fiber channel boundary 855 and a fluid slot 854 positioned radially inward from the fiber slot 852. The fluid bearing 820 also includes an inner member 836 disposed between the first plate 830 and second plate 832 to provide a gap there between. As depicted in FIG. 10A, the channel width WC of the fiber slot 452 is constant through the depth of the fiber slot 452.

Further, similar to the fluid bearings 420 of FIGS. 6A and 6B, the fluid bearing 820 comprises pressure release regions 870 that comprise one or more porous material regions 876 disposed within the inner faces 842, 844 of the first and second plates 830, 832 at the radial position of the fiber slot 852 of the fiber support channel 850 to allow fluid 851 to escape from the fiber slot 852, through the plates 830, 832 from inner faces 842, 844 to the outer faces 843, 845.

Further, as depicted in FIG. 10A, the porous material regions 876 are narrower at portions nearer the arcuate outer surfaces 838, 839 and wider at portions nearer the fiber channel boundary 855, thus allowing more fluid 851 to exit the fiber slot 852 through the porous material regions 876 at locations nearer the opening 860 of the fiber slot 852 (e.g., when the bare optical fiber 14 is located higher in the fiber slot 852) and allowing less fluid 851 to exit the fiber slot 852 through the porous material regions 876 at locations nearer the fiber channel boundary 855 of the fiber slot 852 (e.g., when the bare optical fiber 14 is located lower (deeper) in the fiber slot 852). As such, more upward force will be induced by fluid flow when the bare optical fiber 14 is positioned lower in the fiber slot 852 and as such, an increased amount of work is required for the bare optical fiber 14 to travel downward and mechanically contact or enter the fluid slot 854.

As depicted in FIG. 10A, the porous material regions 876 are narrower near the arcuate outer surfaces 838, 839 due to slanted outer faces 843, 845 of the plates 830, 832, however, other configurations of achieving variable width porous material regions 876 are contemplated. For example, in an embodiment with flat outer faces 843, 845, the porous material of the porous material regions 876 may extend from the inner faces 842, 844 to the outer faces 843, 845 near the fiber channel boundary 855, but not extend to the outer faces 843, 845 at locations nearer the arcuate outer surfaces 838, 839 such that increased open space is disposed between the porous material regions 876 and the outer faces 843, 845 nearing the arcuate outer surfaces 838, 839. Alternatively, the porosity of the porous material regions 876 may vary with depth in the fiber slot 852. In one embodiment, the porosity of porous material regions 876 decreases with increasing depth in fiber slot 852 so that regions of greater porosity are located adjacent opening 860 and regions of lower porosity are located adjacent fiber channel boundary 855.

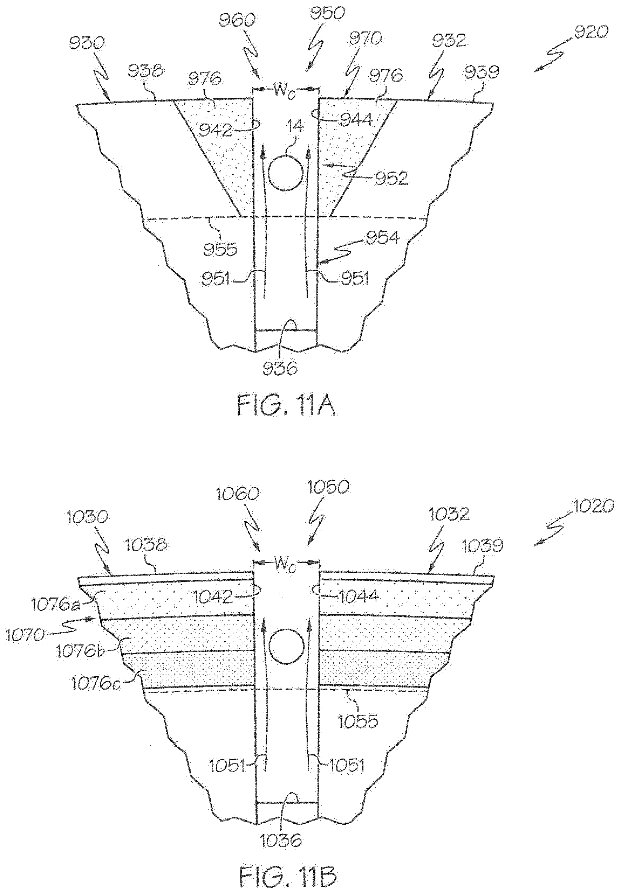

Referring now to FIGS. 11A a partial side plan view of a fluid bearing 920 configured to increase the energy required to move the bare optical fiber 14 from an opening 960 to a fiber channel boundary 955 is depicted. The fluid bearing 920 also includes an inner member 936 disposed between the first plate 930 and second plate 932 to provide a gap there between. In Figure 11A, the fluid bearing 920 comprises pressure release regions 970 that comprise one or more porous material regions 976 that extend into the inner faces 942, 944 of the plates 930, 932, extend to the arcuate outer surfaces 938, 939 of the plates 930, 932, but do not extend through the plates 930, 932 such that fluid 951 traversing the porous material regions 976 exits through the arcuate outer surfaces 938, 939 rather than through outer faces of the plates 930, 932. Further, depth of penetration of the porous material regions 976 into the inner faces 942, 944 decreases at locations nearer the fiber channel boundary 955 such that the fluid pathway through the porous material regions 976 is constricted as the bare optical fiber 14 moves to lower (deeper) positions within the fiber slot 952. This constriction decreases the flow of fluid through the porous material regions 976 as the bare optical fiber 14 approaches the fiber channel boundary 955, increasing the gap flow and thereby increasing the upward force applied to the bare optical fiber and as such, an increased amount of work is required for the bare optical fiber 14 to move deeper into fiber slot 952 and mechanically contact or enter the fluid slot 954.

Referring now to FIGS. 11B a partial side plan view of a fluid bearing 1020 configured to increase the energy required to move the bare optical fiber 14 from an opening 1060 to a fiber channel boundary 1055 is depicted. The fluid bearing 1020 also includes an inner member 1036 disposed between the first plate 1030 and second plate 1032 to provide a gap there between. In Figure 11B, the fluid bearing 1020 comprises pressure release regions 1070 that comprise multiple porous material regions 1076a, 1076b, 1076c that extend into the inner faces 1042, 1044 of the plates 1030, 1032 to the outer faces (not pictured) of the plates 1030, 1032 such that fluid traversing the porous material regions 1076a, 1076b, 1076c exits through the outer faces of the plates 1030, 1032.

Further, the porous material regions 1076a, 1076b, 1076c have different densities such that porous material regions nearer the fiber channel boundary 1055 have a higher density (lower porosity) porous material and porous material regions nearer the arcuate outer surfaces 1038, 1039 of the plates 1030, 1032 have a lower density(higher porosity) porous material. For example, a second porous material region 1076b (positioned between a first porous material region 1076a and a third porous material region 1076c) comprises a higher density than the first porous material region 1076a (which is positioned above the second porous material region 1076b) and a lower density than a third porous material region 1076c (which is positioned below the second porous material region 1076b). While not intending to be limited by theory, increasing the density (decreasing the porosity) of porous material regions 1076a, 1076b, 1076c nearer the fiber channel boundary 1055, decreases the flow of fluid 1051 through the porous material regions 1076a, 1076b, 1076c as the bare optical fiber 14 approaches the fiber channel boundary 1055, increasing the gap flow and thereby increasing the upward force applied to the bare optical fiber and as such, an increased amount of work is required for the bare optical fiber 14 to move deeper into fiber slot 1052 and mechanically contact or enter the fluid slot 1054.

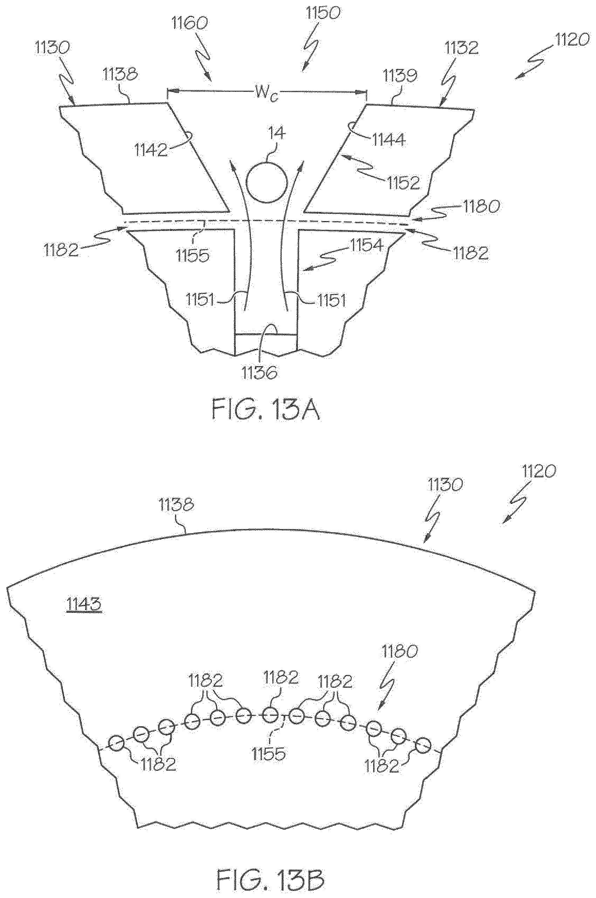

Referring now to FIGS. 13A-14, additional embodiments of the fluid bearing are depicted that are configured to reduce the likelihood of the bare optical fiber entering or mechanically contacting the fluid slot. In particular, the fluid bearings of FIGS. 13A-14 comprise one or more displacement-inhibiting features disposed at or near the fiber channel boundary that define a position in the fiber support channel at which a sharp increase in the upward force applied to the bare optical fiber occurs. The sharp increase in upward force acts to prevent or limit the bare optical fiber from mechanically contacting and/or entering the fluid slot of the fiber support channel.

Referring now to FIGS 13A and 13B a fluid bearing 1120 comprising one or more displacement-inhibiting features 1180 is depicted. In particular, FIG. 13A depicts a partial side plan view of the fluid bearing 1120, and FIG. 13B depicts a partial front plan view of the fluid bearing 1120 showing an outer face 1143 of a first plate 1130. Similar to the fluid bearing 120 of FIGS. 3A and 3B, the fluid bearing 1120 comprises a fiber support channel 1150 with a fiber slot 1152 extending radially inward from an opening 1160 at arcuate outer surfaces 1138, 1139 of first and second plates 1130, 1132 to the fiber channel boundary 1155 and a fluid slot 1154 positioned radially inward from the fiber slot 1152. The fluid bearing 1120 also includes an inner member 1136 disposed between the first plate 1130 and second plate 1132 to provide a gap between an inner face 1142 of the first plate 1130 and an inner face 1144 of the second plate 1132. The channel width WC of the fiber slot 1152 between the inner faces 1142, 1144 is variable through the depth of the fiber slot 1152, decreasing as the bare optical fiber 14 approaches the fiber channel boundary 1155.

Further, as depicted in FIGS. 13A and 13B, the one or more displacement-inhibiting features 1180 comprise a plurality of boundary holes 1182 positioned at or near the fiber channel boundary 1155 of the fiber support channel 1150 (e.g., positioned such that the fiber channel boundary 1155 traverses each boundary hole 1182 or such that boundary holes 1182 are positioned away from fiber channel boundary in either fluid slot 1154 or fiber slot 1152 (e.g. in the shallower regions of fluid slot 1154 or deeper regions of fiber slot 1152). In various embodiments, boundary holes 1182 are positioned such that the fiber channel boundary 1155 is tangential to the bottom, center, or top of each boundary hole 1182; or positioned above or below the fiber channel boundary 1155, such as a position up to 50 fiber diameters above or below fiber channel boundary 1155, or a position up to 25 fiber diameters above or below fiber channel boundary 1155, or a position up to 10 fiber diameters above or below fiber channel boundary 1155, or a position in the range from 1 - 100 fiber diameters above or below fiber channel boundary 1155, or a position in the range from 1 - 50 fiber diameters above or below fiber channel boundary 1155, or a position in the range from 1 - 25 fiber diameters above or below fiber channel boundary 1155, or a position in the range from 1 - 10 fiber diameters above or below fiber channel boundary 1155. In operation, the boundary holes 1182 provide a pathway for fluid 1151 to exit the fiber support channel 1150 before reaching the fiber slot 1152 and as such, fluid flow within the fluid slot 1154 (more specifically, fluid flow below the boundary holes 1182) may be substantially higher than fluid flow within the fiber slot 1152 (more specifically, fluid flow above the boundary holes 1182). Thus, when the bare optical fiber 14 is displaced to a depth in the fiber support channel 1150 that reaches the boundary holes 1182, the bare optical fiber 14 contacts fluid 1151 flowing at an increased flow rate, which applies increased upward force on the bare optical fiber 14 and as such, an increased amount of work is required for the bare optical fiber 14 to move past the boundary holes 1182 deeper into fiber support channel 1150 or to mechanically contact or enter the fluid slot 1154. While the embodiment of the fluid bearing 1120 comprising boundary holes 1182 depicted in FIGS. 13A, 13B comprising a tapered fiber slot 1152, it should be understood that boundary holes 1182 may be included in any of the fluid bearing embodiments described herein.

As an illustrative example, an example fluid bearing 1120 having a 7.62 centimeter radius, boundary holes 1182 each comprising a 0.015 centimeter diameter and a 0.102 centimeter depth (e.g., extending though plates 1130, 1132 each comprising a thickness of about 0.102 centimeters , which are azimuthally spaced every 2 degrees, the upward force applied to the bare optical fiber 14 in the fiber slot 1152 just above boundary holes 1182 is about 200 grams. However, the upward force applied to the bare optical fiber 14 will double to 400 grams once the bare optical fiber 14 passes below the boundary holes 1182 and will remain at 400 grams at any depth in the fluid slot 1154 (since fluid slot 1154 has a constant width). As such, it should be understood that the inclusion of boundary holes 1182 means that a sharp increase in the amount of work required to displace the bare optical fiber 14 to positions below the boundary holes 1182. Displacement of the bare optical fiber 14 to mechanically contact or enter the fluid slot 1154 is inhibited by boundary holes 1182.

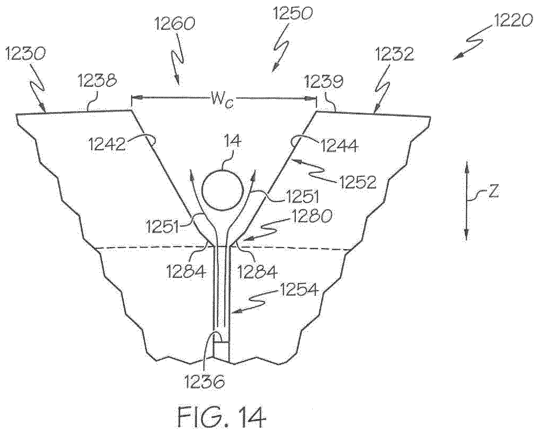

Referring now to FIG. 14, a partial side plan view of a fluid bearing 1220 comprising one or more fiber channel boundary features 1280 is depicted. Similar to the fluid bearing 120 of FIGS. 3A and 3B, the fluid bearing 1220 comprises a fiber support channel 1250 with a fiber slot 1252 extending radially inward from an opening 1260 at arcuate outer surfaces 1238, 1239 of first and second plates 1230, 1232 to the fiber channel boundary 1255 and a fluid slot 1254 positioned radially inward from (e.g., below) the fiber slot 1252. The fluid bearing 1220 also includes an inner member 1236 disposed between the first plate 1230 and second plate 1232 to provide a gap between an inner face 1242 of the first plate 1230 and an inner face 1244 of the second plate 1232. Further, the channel width WC of the fiber slot 1252 is variable through the depth of the fiber slot 1252, decreasing as the bare optical fiber 14 approaches the fiber channel boundary 1255.

Further, as depicted in FIG. 14, the one or more displacement-inhibiting features 1280 comprise a plurality of pinching regions 1284 positioned at or near the fiber channel boundary 1255 of the fiber support channel 1250. The pinching regions 1284 are portions of the inner faces 1242, 1244 of the plates 1230, 1232 at the fiber channel boundary 1255 that are tapered at a larger angle with respect to a Z axis (e.g., the upward/downward radial axis that the bare optical fiber 14 corresponding to the depth or direction of displacement of the bare optical fiber 14 in the fiber slot 1152) than the portions of the inner faces 1242, 1244 that define the fiber slot 1252. In other words, the slope magnitude of the portions of the inner faces 1242, 1244 that define the fiber slot 1252 is smaller than the slope magnitude of the pinching regions 1284, resulting in a narrowing of the fiber support channel 1250 and a constriction in the width of the area available for flow of fluid 1251.

In operation, because the pinching regions 1284 narrow the fiber support channel 1250, the upward force of the flow of fluid 1251 acting to support (levitate) the bare optical fiber 14 increases when the depth of displacement of the bare optical fiber 14 in fluid support channel 1250 reaches the pinching regions 1284. For example, if the angle of the portions of the inner faces 1242, 1244 that define the fiber slot 1252 with respect to the Z axis is 0.6 degrees and the angle of the pinching regions 1284 with respect to the Z axis is 2 degrees, the gap between the bare fiber optical fiber 14 and the inner walls 1242, 1244 is reduced by a factor of two when the bare optical fiber 14 reaches the pinching regions 1284 and the upward force on the bare optical fiber 14 will double. As such, it should be understood that the inclusion of pinching regions 1284 means that an increased amount of work is required for the bare optical fiber 14 to mechanically contact or enter the fluid slot 1254.

Further, other fluid bearing embodiments are contemplated to inhibit downward displacement of the bare optical fiber or prevent or limit the bare optical fiber from mechanically contacting and/or entering the fluid slot of the fiber support channel. For example, increasing the flow rate of fluid through the fluid bearing (e.g., increasing the fluid flow being introduced into the fluid slot or fiber support channel) would increase the equilibrium height of the bare optical fiber for any applied downward force, thus increasing the amount of work required for the bare optical fiber to move downward in the fiber support channel or to mechanically contact or enter the fluid slot. Further, increasing the depth of the fiber slot of the fiber support channel will reduce the probability of the bare optical fiber mechanically contacting and/or entering the fluid slot of the fiber support channel.

As such, the fluid bearings described herein are capable of many functions including providing a non-vertical path for the production of optical fibers. In this regard, fluid bearings can be used in any combination with the methods of transporting optical fiber as previously discussed herein. In addition, it should be understood that the embodiments of the fluid bearings as discussed and illustrated herein can be used at any stage during the production of the optical fiber. By enabling a non-vertical path prior to the coating applicator, the fluid bearings and the optical fiber production systems incorporating these fluid bearings have design flexibility in that components can be easily manipulated and interchanged within the optical fiber production systems while providing systems that utilize less space as compared with conventional draw towers. Further using the fluid bearing configurations described herein, bare optical fiber may be maintained in a fiber slot of a fiber support channel, which is sized and configured to house the bare optical fiber and the bare optical fiber may be prevented from mechanically contacting and/or entering a fluid slot of the fiber support channel. Accordingly, the optical fiber production systems incorporating fluid bearings and methods of producing the optical fibers described herein provide many advantages over conventional systems and methods.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about", it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a", "an" and "the" include plural referents unless the context clearly dictates otherwise. Thus, for example, reference to "a" component includes aspects having two or more such components, unless the context clearly indicates otherwise.

## Claims

1. A fluid bearing for use in producing an optical fiber, the bearing comprising:
- an optical fiber pathway along which bare optical fiber (14) is drawn through the fluid bearing by way of draw tension;
- a fluid pathway along which fluid is directed with a force or pressure against the optical fiber (14) as it is drawn through the fluid bearing along the optical fiber pathway to thereby cushion the optical fiber (14) in the bearing, whereby the optical fiber (14) is stabilizable in the bearing at a position at which the fiber draw tension balances the fluid force; and
- tension compensating means for compensating tension in the optical fiber (14) resulting from an imbalance between the draw tension and the fluid force, so that displacement from the position at which the fiber draw tension balances the fluid force is counteracted, whereby the optical fiber (14) is displaceable through the bearing without mechanical contact between the optical fiber (14) and the fluid bearing, which tension compensating means comprise force or pressure reducing means for reducing the force or pressure of the fluid directed against the optical fiber, wherein the fluid bearing comprises a fiber support channel (550, 1250) encompassing the optical fiber pathway, which fiber support channel (550, 1250) provides a plenum for the fluid, and which fiber support channel (550, 1250) is configured so that the optical fiber (14) is displaceable through the bearing without rotation of the fluid bearing, the fluid bearing further comprising a first plate (530, 1230) and a second plate (532,1232), the fiber support channel (550, 1250) disposed between the first and second plates (530, 532, 1230, 1232),
wherein the fiber support channel (550, 1250) comprises a fiber slot (552,1252) and a fluid slot (554, 1254) through which the fluid is directed against the optical fiber (14),
wherein the fiber support channel (550,1250) has an opening (560,1260), the fiber support channel (550, 1250) extending away from the opening (560, 1260) in a depth direction towards the fluid slot (554, 1254),
the opening (560,1260) being defined by an outer surface (538,1238) of the first plate (530,1230) and an outer surface (539,1239) of the second plate (532,1232),
**characterised in that**:
the tension compensating means comprising the first plate (530,1230) including a first inner face (542a,1242) and a first outer surface (538, 1238) adjacent to the first inner face (542a, 1242) and the second plate (532,1232) including a second inner face (544a, 1244) and a second outer surface (539, 1239) adjacent to the second inner face (544a, 1244), the first inner face (542a, 1242) and second inner face (544a, 1244) facing the fiber support channel (550, 1250),
wherein the first plate (530,1230) further includes a third inner face (542b, 1284) adjacent the first inner face (542a, 1242) and the second plate (532, 1232) further includes a fourth inner face (544b, 1284) adjacent the second inner face (544a, 1244), the first inner face (542a, 1242) and the second inner face (544a, 1244) having a first slope magnitude relative to an axis extending in the depth direction, and the third inner face (542b, 1284) and fourth inner face (544b, 1284) having a second slope magnitude relative to the axis extending in the depth direction, the first slope magnitude differing from the second slope magnitude.

2. The fluid bearing according to claim 1, wherein the first inner face (542a), the second inner face (544a), the third inner face (542b), and the fourth inner face (544b) are linear segments.

3. The fluid bearing according to claim 1 or 2, wherein the first slope magnitude is less than the second slope magnitude.

4. The fluid bearing according to any of the claims 1-3, further comprising an inner member (536, 1236) sandwiched between the first (530, 1230) and second (532, 1232) plates, which inner member (536,1236) has a diameter less than a diameter of the first (530, 1230) and second plates (532, 1232).

5. The fluid bearing according to any of the preceding claims, wherein a position of the optical fiber (14) in the fiber slot (552,1252) and the pressure of the fluid on the optical fiber (14) at that position is functionally related, which functional relationship is graphically representable by way of plotting the position of the optical fiber (14) at a particular depth in the fiber slot (552,1252) against the force of the fluid directed against the optical fiber (14) at the position to provide a force curve.

6. The fluid bearing according to claim 5, wherein the force curve is convex in shape.

7. The fluid bearing of any of the preceding claims, wherein the first slope magnitude is defined by a first angle with respect to the axis extending in the depth direction,
the first angle being greater than one of the following:
0°,
0.1°,
0.2°,
0.3°, or
wherein the first angle is in the range from 0.1° - 9°, preferably wherein the first angle is in the range from 0.3° - 7°, and
wherein the second slope magnitude is defined by a second angle with respect to the axis extending in the depth direction, the second angle being greater than one of the following:
0°,
0.1°,
0.2°,
0.3°, or
wherein the second angle is in the range from 0.1° - 9°, preferably wherein the first angle is in the range from 0.3° - 7°.

8. The fluid bearing of claim 7 wherein the first angle is greater than 0.1° and the second angle is greater than 0.1°, preferably wherein the first angle is greater than 0.2° and the second angle is greater than 0.1°, more preferably wherein the first angle is greater than 0.3° and the second angle is greater than 0.1°, and/or
wherein the first angle is in the range from 0.1° - 9° and the second angle is in the range from 0.3° -7°.

9. The fluid bearing of any of the claims 7-9 wherein the first angle is greater than the second angle by at least 0.1°, preferably wherein the first angle is greater than the second angle by at least 0.3°.

10. The fluid bearing of any of the preceding claims wherein the first inner face (542a, 1242) includes a curved segment and said second inner face (544a, 1244) includes a curved segment.

11. The fluid bearing of any of the preceding claims 5-10, wherein the force curve includes a first linear segment having a first slope and a second linear segment having a second slope, the second slope differing from the first slope.

12. The fluid bearing of any of the preceding claims 5-11 wherein the force curve includes a curved segment.

13. System for providing an optical fiber, the system comprising a plurality of fluid bearings according to any of the preceding claims, wherein a first bearing is positioned in a different horizontal plane than a second bearing.

14. A method for producing an optical fiber comprising:
- directing a bare optical fiber (14) along a first pathway to a fluid bearing according to any of the preceding claims 1-12, or a system according to claim 13, and
- flowing a fluid through the fiber support channel (550, 1250) toward the opening (560,1260) of the fiber support channel (550, 1250), the fluid contacting the bare optical fiber (14) and providing an upward force on the bare optical fiber (14), the upward force defined by a force curve describing a dependence of the upward force on a depth of the bare optical fiber (14) in the fiber support channel (550, 1250), the force curve having a convex shape,
- wherein draw tension is applied to the bare optical fiber (14).

15. The method of claim 14, wherein the directing includes conveying the bare optical fiber (14) at a speed greater than 50 m/s along the first pathway, preferably wherein the fluid bearing redirects the bare optical fiber from the first pathway to a second pathway, which first pathway is preferably in a different horizontal plane than the second bearing.

## Patentansprüche

1. Gleitlager zur Verwendung bei der Herstellung einer Glasfaser, wobei das Lager Folgendes umfasst:
- einen Glasfaserweg, entlang dem eine blanke Glasfaser (14) mittels Zugspannung durch das Gleitlager gezogen wird;
- einen Fluidweg, entlang dem Fluid mit Kraft oder Druck gegen die Glasfaser (14) gerichtet wird, während diese entlang dem Glasfaserweg durch das Gleitlager gezogen wird, um dadurch die Glasfaser (14) in dem Lager zu polstern, wodurch die Glasfaser (14) in dem Lager an einer Position stabilisiert werden kann, an der die Glasfaserzugspannung die Fluidkraft ausgleicht; und
- Spannungsausgleichsmittel zum Ausgleichen der aus einer Unausgeglichenheit zwischen der Zugspannung und der Fluidkraft resultierenden Spannung in der Glasfaser (14), so dass der Verschiebung von der Position, an der die Glasfaserzugspannung die Fluidkraft ausgleicht, entgegengewirkt wird, wodurch die Glasfaser (14) ohne mechanischen Kontakt zwischen der Glasfaser (14) und dem Gleitlager durch das Lager verschiebbar ist, wobei die Spannungsausgleichsmittel Mittel zum Reduzieren von Kraft oder Druck umfassen, um die Kraft oder den Druck des gegen die Glasfaser gerichteten Fluids zu reduzieren, wobei das Gleitlager einen Faserstützkanal (550, 1250) umfasst, der den Glasfaserweg umgibt, wobei der Faserstützkanal (550, 1250) ein Plenum für das Fluid bereit stellt, und wobei der Faserstützkanal (550, 1250) derart konfiguriert ist, dass die Glasfaser (14) ohne Drehung des Gleitlagers durch das Lager verschiebbar ist, wobei das Gleitlager weiterhin eine erste Platte (530, 1230) und eine zweite Platte (532, 1232) umfasst, wobei der Faserstützkanal (550, 1250) zwischen der ersten und der zweiten Platte (530, 532, 1230, 1232) angeordnet ist,
wobei der Faserstützkanal (550, 1250) einen Faserschlitz (552, 1252) und einen Fluidschlitz (554, 1254), durch den das Fluid gegen die Glasfaser (14) gerichtet wird, umfasst,
wobei der Faserstützkanal (550, 1250) eine Öffnung (560, 1260) aufweist, wobei der Faserstützkanal (550, 1250) sich von der Öffnung (560, 1260) weg in einer Tiefenrichtung in Richtung des Fluidschlitzes (554, 1254) erstreckt,
wobei die Öffnung (560, 1260) durch eine Außenfläche (538, 1238) der ersten Platte (530, 1230) und eine Außenfläche (539, 1239) der zweiten Platte (532, 1232) definiert wird,
**dadurch gekennzeichnet, dass**:
die Spannungsausgleichsmittel die erste Platte (530, 1230) einschließlich einer ersten Innenfläche (542a, 1242) und einer ersten Außenfläche (538, 1238) neben der ersten Innenfläche (542a, 1242) sowie die zweite Platte (532, 1232) einschließlich einer zweiten Innenfläche (544a, 1244) und einer zweiten Außenfläche (539, 1239) neben der zweiten Innenfläche (544a, 1244) umfasst, wobei die erste Innenfläche (542a, 1242) und die zweite Innenfläche (544a, 1244) zu dem Faserstützkanal (550, 1250) zeigen,
wobei die erste Platte (530, 1230) weiterhin eine dritte Innenfläche (542b, 1284) neben der ersten Innenfläche (542a, 1242) einschließt und die zweite Platte (532, 1232) weiterhin eine vierte Innenfläche (544b, 1284) neben der zweiten Innenfläche (544a, 1244) einschließt,
wobei die erste Innenfläche (542a, 1242) und die zweite Innenfläche (544a, 1244) eine erste Steigungsgröße in Bezug auf eine sich in der Tiefenrichtung erstreckende Achse aufweisen, und die dritte Innenfläche (542b, 1284) und die vierte Innenfläche (544b, 1284) eine zweite Steigungsgröße in Bezug auf die sich in der Tiefenrichtung erstreckende Achse aufweisen, wobei die erste Neigungsgröße sich von der zweiten Neigungsgröße unterscheidet.

2. Gleitlager nach Anspruch 1, wobei die erste Innenfläche (542a), die zweite Innenfläche (544a), die dritte Innenfläche (542b) und die vierte Innenfläche (544b) lineare Segmente sind.

3. Gleitlager nach Anspruch 1 oder 2, wobei die erste Steigungsgröße kleiner als die zweite Steigungsgröße ist.

4. Gleitlager nach einem der Ansprüche 1 bis 3, das weiterhin ein inneres Element (536, 1236) umfasst, das von der ersten (530, 1230) und der zweiten (532, 1232) Platte sandwichartig umgeben ist, wobei das innere Element (536, 1236) einen Durchmesser aufweist, der kleiner als der Durchmesser der ersten (530, 1230) und der zweiten (532, 1232) Platte ist.

5. Gleitlager nach einem der vorhergehenden Ansprüche, wobei eine Position der Glasfaser (14) in dem Faserschlitz (552, 1252) und der Druck des Fluids auf die Glasfaser (14) an dieser Position funktional in Bezug zueinander sind, wobei die funktionale Beziehung grafisch dargestellt werden kann mittels Zeichnen der Position der Glasfaser (14) in einer bestimmten Tiefe in dem Faserschlitz (552, 1252) entsprechend der Kraft des gegen die Glasfaser (14) gerichteten Fluids an der Position, um eine Kraftkurve bereit zu stellen.

6. Gleitlager nach Anspruch 5, wobei die Kraftkurve eine konvexe Form aufweist.

7. Gleitlager nach einem der vorhergehenden Ansprüche, wobei die erste Steigungsgröße durch einen ersten Winkel in Bezug auf die sich in der Tiefenrichtung erstreckenden Achse definiert wird,
wobei der erste Winkel größer als einer der Folgenden ist:
0°,
0,1°,
0,2°,
0,3°, oder
wobei der erste Winkel in dem Bereich von 0,1° bis 9° liegt, vorzugsweise wobei der erste Winkel in dem Bereich von 0,3° bis 7° liegt, und wobei die zweite Steigungsgröße durch einen zweiten Winkel in Bezug auf die sich in der Tiefenrichtung erstreckende Achse definiert wird, wobei der zweite Winkel größer als einer der Folgenden ist:
0°,
0,1°,
0,2°,
0,3°, oder
wobei der zweite Winkel in dem Bereich von 0,1° bis 9° liegt, vorzugsweise wobei der erste Winkel in dem Bereich von 0,3° bis 7° liegt.

8. Gleitlager nach Anspruch 7, wobei der erste Winkel größer als 0,1° ist und der zweite Winkel größer als 0,1° ist, vorzugsweise wobei der erste Winkel größer als 0,2° ist und der zweite Winkel größer als 0,1° ist, insbesondere wobei der erste Winkel größer als 0,3° ist und der zweite Winkel größer als 0,1° ist, und/oder
wobei der erste Winkel in dem Bereich von 0,1° bis 9° liegt und der zweite Winkel in dem Bereich von 0,3° bis 7° liegt.

9. Gleitlager nach einem der Ansprüche 7 bis 9, wobei der erste Winkel um mindestens 0,1° größer als der zweite Winkel ist, vorzugsweise wobei der erste Winkel um mindestens 0,3° größer als der zweite Winkel ist.

10. Gleitlager nach einem der vorhergehenden Ansprüche, wobei die erste Innenfläche (542a, 1242) ein gekrümmtes Segment enthält und die zweite Innenfläche (544a, 1244) ein gekrümmtes Segment enthält.

11. Gleitlager nach einem der vorhergehenden Ansprüche 5 bis 10, wobei die Kraftkurve ein erstes lineares Segment mit einer ersten Steigung und ein zweites lineares Segment mit einer zweiten Steigung enthält, wobei die erste Steigung sich von der zweiten Steigung unterscheidet.

12. Gleitlager nach einem der vorhergehenden Ansprüche 5 bis 11, wobei die Kraftkurve ein gekrümmtes Segment enthält.

13. System zur Bereitstellung einer Glasfaser, wobei das System eine Vielzahl von Gleitlagern nach einem der vorhergehenden Ansprüche umfasst, wobei ein erstes Lager in einer unterschiedlichen horizontalen Ebene als ein zweites Lager angeordnet ist.

14. Verfahren zur Herstellung einer Glasfaser, wobei das Verfahren Folgendes umfasst:
- Richten einer blanken Glasfaser (14) entlang eines ersten Wegs in ein Gleitlager nach einem der vorhergehenden Ansprüche 1 bis 12 oder ein System nach Anspruch 13, und
- Strömen eines Fluids durch den Faserstützkanal (550, 1250) in Richtung der Öffnung (560, 1260) des Faserstützkanals (550, 1250), wobei das Fluid mit der blanken Glasfaser (14) in Kontakt kommt und eine nach oben drückende Kraft an der blanken Glasfaser (14) bereit stellt, wobei die nach oben drückende Kraft durch eine Kraftkurve definiert wird, die eine Abhängigkeit der nach oben drückenden Kraft von einer Tiefe der blanken Glasfaser (14) in dem Faserstützkanal (550, 1250) beschreibt, wobei die Kraftkurve eine konvexe Form aufweist,
- wobei eine Zugspannung auf die blanke Glasfaser (14) aufgebracht wird.

15. Verfahren nach Anspruch 14, wobei das Richten ein Befördern der blanken Glasfaser (14) mit einer Geschwindigkeit, die höher als 50 m/s ist, entlang dem ersten Weg umfasst, vorzugsweise wobei das Gleitlager die blanke Glasfaser von dem ersten Weg zu einem zweiten Weg umleitet, wobei der erste Weg sich vorzugsweise in einer anderen horizontalen Ebene als das zweite Lager befindet.

## Revendications

1. Palier fluide destiné à la production d'une fibre optique, le palier comprenant :
- une voie de passage de fibre optique le long de laquelle une fibre optique nue (14) est étirée à travers le palier fluide au moyen d'une tension d'étirage ;
- une voie de passage de fibre le long de laquelle du fluide est dirigé selon une force ou une pression contre la fibre optique (14) tandis qu'elle est étirée à travers le palier fluide le long de la voie de passage de fibre optique pour ainsi amortir la fibre optique (14) dans le palier, moyennant quoi la fibre optique (14) peut être stabilisée dans le palier en une position à laquelle il y a équilibre entre la tension d'étirage de fibre et la force du fluide ; et
- un moyen de compensation de tension permettant de compenser la tension présente dans la fibre optique (14) en conséquence d'un déséquilibre entre la tension d'étirage et la force du fluide, afin de contrer un déplacement hors de la position à laquelle il y a équilibre entre la tension d'étirage de fibre et la force du fluide, moyennant quoi la fibre optique (14) est déplaçable à travers le palier sans contact mécanique entre la fibre optique (14) et le palier fluide, ledit moyen de compensation de tension comprenant un moyen de réduction de force ou de pression pour réduire la force ou la pression du fluide dirigé contre la fibre optique, ledit palier fluide comprenant un canal de support de fibre (550, 1250) englobant la voie de passage de fibre optique, lequel canal de support de fibre (550, 1250) assure un espace pour le fluide, et lequel canal de support de fibre (550, 1250) est conçu de telle manière que la fibre optique (14) est déplaçable à travers le palier sans rotation du palier fluide, le palier fluide comprenant en outre une première plaque (530, 1230) et une deuxième plaque (532, 1232), le canal de support de fibre (550, 1250) étant disposé entre les première et deuxième plaques (530, 532, 1230, 1232),
ledit canal de support de fibre (550, 1250) comprenant une fente pour fibre (552, 1252) et une fente pour fluide (554, 1254) à travers le fluide est dirigé contre la fibre optique (14),
ledit canal de support de fibre (550, 1250) présentant une ouverture (560, 1260), le canal de support de fibre (550, 1250) s'écartant de l'ouverture (560, 1260) dans le sens de la profondeur en direction de la fente pour fluide (554, 1254),
l'ouverture (560, 1260) étant définie par une surface extérieure (538, 1238) de la première plaque (530, 1230) et une surface extérieure (539, 1239) de la deuxième plaque (532, 1232),
**caractérisé en ce que** :
le moyen de compensation de tension comprend la première plaque (530, 1230) comportant une première face intérieure (542a, 1242) et une première surface extérieure (538, 1238) adjacente à la première face intérieure (542a, 1242) et la deuxième plaque (532, 1232) comportant une deuxième face intérieure (544a, 1244) et une deuxième surface extérieure (539, 1239) adjacente à la deuxième face intérieure (544a, 1244) ; la première face intérieure (542a, 1242) et la deuxième face intérieure (544a, 1244) étant tournées vers le canal de support de fibre (550, 1250),
ladite première plaque (530, 1230) comportant en outre une troisième face intérieure (542b, 1284) adjacente à la première face intérieure (542a, 1242) et la deuxième plaque (532, 1232) comportant en outre une quatrième face intérieure (544b, 1284) adjacente à la deuxième face intérieure (544a, 1244), la première face intérieure (542a, 1242) et la deuxième face intérieure (544a, 1244) présentant une première grandeur de pente par rapport à un axe s'étendant dans le sens de la profondeur, et la troisième face intérieure (542b, 1284) et la quatrième face intérieure (544b, 1284) présentant une deuxième grandeur de pente par rapport audit axe s'étendant dans le sens de la profondeur, la première grandeur de pente étant différente de la deuxième grandeur d'inclinaison.

2. Palier fluide selon la revendication 1, dans lequel la première face intérieure (542a), la deuxième face intérieure (544a), la troisième face intérieure (542b) et la quatrième face intérieure (544b) sont des segments linéaires.

3. Palier fluide selon la revendication 1 ou 2, dans lequel la première grandeur de pente est inférieure à la deuxième grandeur d'inclinaison.

4. Palier fluide selon l'une quelconque des revendications 1 à 3, comprenant en outre un élément intérieur (536, 1236) enserré entre les première (530, 1230) et deuxième (532, 1232) plaques, lequel élément intérieur (536, 1236) a un diamètre inférieur au diamètre des première (530, 1230) et deuxième (532, 1232) plaques.

5. Palier fluide selon l'une quelconque des revendications précédentes, dans lequel la position de la fibre optique (14) dans la fente pour fibre (552, 1252) et la pression du fluide sur la fibre optique (14) à cette position sont fonctionnellement liées, laquelle relation fonctionnelle peut être représentée graphiquement en traçant la position de la fibre optique (14) à une profondeur particulière dans la fente pour fibre (552, 1252) en fonction de la force du fluide dirigée contre la fibre optique (14) à ladite position pour produire une courbe de force.

6. Palier fluide selon la revendication 5, dans lequel la courbe de force est de forme convexe.

7. Palier fluide selon l'une quelconque des revendications précédentes, dans lequel la première grandeur de pente est définie par un premier angle par rapport à l'axe s'étendant dans le sens de la profondeur,
le premier angle étant supérieur à l'un des angles suivants :
0°,
0,1°,
0,2°,
0,3°, ou
dans lequel le premier angle se situe dans la plage de 0,1° à 9°, de préférence dans lequel le premier angle se situe dans la plage de 0,3° à 7°, et
dans lequel la deuxième grandeur de pente est définie par un deuxième angle par rapport à l'axe s'étendant dans le sens de la profondeur, le deuxième angle étant supérieur à l'un des angles suivants :
0°,
0,1°,
0,2°,
0,3°, ou
dans lequel le deuxième angle se situe dans la plage de 0,1° à 9°, de préférence dans lequel le premier angle se situe dans la plage de 0,3° à 7°.

8. Palier fluide selon la revendication 7, dans lequel le premier angle est supérieur à 0,1° et le deuxième angle est supérieur à 0,1°, dans lequel de préférence le premier angle est supérieur à 0,2° et le deuxième angle est supérieur à 0,1°, dans lequel plus préférablement le premier angle est supérieur à 0,3° et le deuxième angle est supérieur à 0,1°, et/ou
dans lequel le premier angle se situe dans la plage de 0,1° à 9° et le deuxième angle se situe dans la plage de 0,3° à 7°.

9. Palier fluide selon l'une quelconque des revendications 7 à 9, dans lequel le premier angle est supérieur au deuxième angle d'au moins 0,1°, le premier angle étant de préférence supérieur au deuxième angle d'au moins 0,3°.

10. Palier fluide selon l'une quelconque des revendications précédentes, dans lequel la première face intérieure (542a, 1242) comporte un segment incurvé et ladite deuxième face intérieure (544a, 1244) comporte un segment incurvé.

11. Palier fluide selon l'une quelconque des revendications précédentes 5 à 10, dans lequel la courbe de force comporte un premier segment linéaire présentant une première pente et un deuxième segment linéaire présentant une deuxième pente, la deuxième pente étant différente de la première pente.

12. Palier fluide selon l'une quelconque des revendications précédentes 5 à 11, dans lequel la courbe de force comporte un segment incurvé.

13. Système de réalisation de fibre optique, le système comprenant une pluralité de paliers fluides selon l'une quelconque des revendications précédentes, dans lequel un premier palier est positionné dans un plan horizontal différent de celui d'un deuxième palier.

14. Procédé de production de fibre optique comprenant :
- la direction d'une fibre optique nue (14) le long d'une première voie de passage vers un palier fluide selon l'une quelconque des revendications précédentes 1 à 12 ou un système selon la revendication 13, et
- l'écoulement d'un fluide à travers le canal de support de fibre (550, 1250) en direction de l'ouverture (560, 1260) du canal de support de fibre (550, 1250), le fluide venant au contact de la fibre optique nue (14) et produisant une force montante sur la fibre optique nue (14), ladite force montante étant définie par une courbe de force descriptive de la dépendance entre ladite force montante et la profondeur de la fibre optique nue (14) dans le canal de support de fibre (550, 1250), la courbe de force présentant une forme convexe ;
- une tension d'étirage étant appliquée à la fibre optique nue (14).

15. Procédé selon la revendication 14, dans lequel l'étape de direction comporte l'amenée de la fibre optique nue (14) à une vitesse supérieure à 50 m/s le long de la première voie de passage, et dans lequel de préférence le palier fluide redirige la fibre optique nue depuis la première voie de passage vers une deuxième voie de passage, laquelle première voie de passage est de préférence située dans un plan horizontal différent de celui du deuxième palier.
